(19) **Europäisches Patentamt / European Patent Office / Office européen des brevets**

(11) **EP 4 414 904 A1**

(12) # EUROPEAN PATENT APPLICATION
published in accordance with Art. 153(4) EPC

(43) Date of publication:
**14.08.2024 Bulletin 2024/33**

(21) Application number: **22885103.6**

(22) Date of filing: **02.06.2022**

(51) International Patent Classification (IPC):
**G06N 20/20** (2019.01)

(52) Cooperative Patent Classification (CPC):
**G06F 15/173; G06F 30/39; G06N 3/0464;**
**G06N 20/20;** G06F 2115/04

(86) International application number:
**PCT/CN2022/096842**

(87) International publication number:
**WO 2023/071193 (04.05.2023 Gazette 2023/18)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 28.10.2021 CN 202111265110
27.12.2021 CN 202111617115

(71) Applicant: **Huawei Technologies Co., Ltd.**
**Shenzhen, Guangdong 518129 (CN)**

(72) Inventors:
• **SHEN, Shengyu**
**Shenzhen, Guangdong 518129 (CN)**

• **CHANG, Zeshan**
**Shenzhen, Guangdong 518129 (CN)**
• **WANG, Jingyan**
**Shenzhen, Guangdong 518129 (CN)**
• **MI, Guangcan**
**Shenzhen, Guangdong 518129 (CN)**
• **LIU, Xin**
**Shenzhen, Guangdong 518129 (CN)**
• **DUAN, Qihang**
**Shenzhen, Guangdong 518129 (CN)**
• **LING, Wenkai**
**Shenzhen, Guangdong 518129 (CN)**
• **LIN, Weibin**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **MODEL TRAINING SYSTEM AND METHOD**

(57) This application provides a model training system and method, to implement efficient data transfer between a large quantity of processors. The system includes a first group, where the first group includes an MEMS and S×C processors, S is a quantity of nodes in the first group, C is a quantity of processors in one node, and both S and C are positive integers, the MEMS, configured to construct an optical transmission channel between any two of the S nodes, and the S×C processors, configured to jointly train a model. In one iteration of joint model training, the S×C processors are configured to run model training in respective processors, to obtain respective corresponding data. At least two of the S×C processors transmit target data through the optical transmission channel. A processor that receives the target data may be configured to adjust a parameter for model training in the processor based on the target data.

FIG. 15

**Description**

**CROSS-REFERENCE TO RELATED APPLICATIONS**

This application claims priority to Chinese Patent Application No. 202111265110.7, filed with the China National Intellectual Property Administration on October 28, 2021 and entitled "METHOD FOR CONSTRUCTING ALL-OPTICAL AI TRAINING PARAMETER PLANE", which is incorporated herein by reference in its entirety. This application claims priority to Chinese Patent Application No. 202111617115.1, filed with the China National Intellectual Property Administration on December 27, 2021 and entitled "MODEL TRAINING SYSTEM AND METHOD", which is incorporated herein by reference in its entirety.

**TECHNICAL FIELD**

This application relates to the field of artificial intelligence, and in particular, to a model training system and method.

**BACKGROUND**

Artificial intelligence (artificial intelligence, AI) model training refers to providing a large amount of training data for a machine, so that the machine can find a proper neural network architecture and a value assigned to each parameter in the neural network architecture. In this way, the machine can accurately identify or distinguish objects through a neural network.

To perform AI model training more efficiently and accurately, a large quantity of processors may be used to form a model training machine, where the processor is, for example, a graphics processing unit (graphics processing unit, GPU), a central processing unit (central processing unit, CPU), or a neural network accelerator (neural-network processing unit, NPU). Different training data may be input to the large quantity of processors, or different sub-models in an AI model may further be run. The large quantity of processors may obtain respective intermediate data after each iteration, and then transfer the respective intermediate data, to obtain an aggregation result of all intermediate data in a current iteration. Subsequently, each processor may use the aggregation result as an input of a next iteration. In this way, after a plurality of rounds of iterative operations, the machine can learn more key feature details, thereby becoming more intelligent.

As a scale of the neural network and a scale of a dataset increase sharply, data is transferred more frequently between processors. In this way, how to implement efficient data transmission between the large quantity of processors becomes a problem that needs to be urgently resolved currently.

**SUMMARY**

This application provides a model training system and method, to implement efficient data transfer between a large quantity of processors.

According to a first aspect, this application provides a model training system, including:

a first group, where the first group includes a micro-electro-mechanical system (micro-electro-mechanical system, MEMS) and S×C processors, S is a quantity of nodes in the first group, C is a quantity of processors in one node, and both S and C are positive integers; the MEMS, configured to construct an optical transmission channel between any two nodes in the S nodes; and the S×C processors, configured to jointly train a model, where in one iteration of joint model training, at least two processors in the S×C processors transmit target data through the optical transmission channel, and a processor that receives the target data is configured to adjust a parameter for model training in the processor based on the target data. In this way, a communication connection between any two of the S nodes is implemented by the MEMS, that is, any node may send data to another node through the optical transmission channel constructed by the MEMS. Further, data obtained by one processor in the S nodes by performing model training may be transmitted to a processor of another node through the optical transmission channel constructed by the MEMS, thereby implementing efficient data transfer in model training.

In a possible implementation, the first group includes a first node and a second node, the first node includes a first processor, and the second node includes a second processor. The first processor is configured to perform model training in the first processor to obtain intermediate data of the first processor, and obtain first target data based on the intermediate data of the first processor, where the first target data may be all or a part of the intermediate data of the first processor. The first processor is further configured to send the first target data to the second processor through an optical transmission channel constructed by a first MEMS. The second processor is configured to adjust a parameter for model training in the second processor based on the first target data, where the first MEMS is located between the first node and the second node.

In a possible implementation, the first processor may be configured to send the first target data to the second processor through the optical transmission channel constructed by the first MEMS and an intra-node channel, where the intra-node channel includes a channel that is in the first node and that is between the first processor and the first MEMS, and/or a channel that is in the second node and that is between the second processor and the first MEMS. In this way, when a port in the first processor is not directly connected to a port of the first MEMS, the first processor may send, through a channel in the first node, the first target data to a processor that is in the first node and that is directly connected to the port of the first MEMS, and the processor may send the first target data to the second node through the optical transmission channel constructed by the first MEMS. Correspondingly, when a port in the second processor is not directly connected to the port of the first MEMS, a processor that is in the second node and that is directly connected to the port of the first MEMS may receive the first target data from the first node, and then send the first target data to the second processor through a channel on the second node.

In a possible implementation, the system further includes: a wavelength selective switch (wavelength selective switch, WSS) and (W-1) extended groups, where W is an integer greater than or equal to 2, the first group and the (W-1) extended groups form W groups, and the WSS is connected to each of the W groups. In this way, while a fixed optical transmission channel is constructed between any two nodes, the MEMS may expand a training scale of model training to W times of original scale through a feature of the WSS, that is, one input port and different wavelengths may correspond to different output ports, to further perform model training on a larger scale.

In a possible implementation, the WSS includes W first WSS ports and W second WSS ports. The W first WSS ports are respectively connected to W node ports, the W node ports respectively belong to the W groups, and positions of the W node ports in respective groups are corresponding. The W node ports correspond to respective MEMS ports in the respective groups, and MEMS ports corresponding to the W node ports are respectively connected to the W second WSS ports. In this way, the WSS and the MEMS in the W groups may connect nodes between any two of the W groups, so that the processors in any two groups can transmit data to each other, thereby helping expand the training scale.

In a possible implementation, the first processor is further configured to sequentially send the first target data to the second processor through optical transmission channels separately constructed by the WSS and a second MEMS. The second node is another node other than the first node in the first group, or is a node in any one of the (W-1) extended groups. The WSS and the second MEMS are sequentially located between the first node and the second node, and the second MEMS and the second node belong to a same group. In this way, through the WSS and the second MEMS, the first processor may send the first target data to the processor in another node in the group, and may further send the first target data to a processor in another group, thereby helping expand a training scale.

In a possible implementation, the first processor is specifically configured to modulate the first target data to a carrier, where a wavelength of the carrier is a preset wavelength corresponding to a group to which the second node belongs. The WSS is configured to send the carrier carrying the first target data to the second MEMS based on a mapping relationship between the wavelength of the carrier and the group to which the second node belongs. In this way, the first processor may adjust the wavelength of the carrier for carrying the first target data based on the preset wavelength of the group to which the second processor belongs, to send different target data to different groups. In addition, the first processor may quickly adjust the wavelength of the carrier, which helps increase a rate of transmitting data by the first processor to another processor.

In a possible implementation, each of the W groups corresponds to two preset wavelengths. That is, when the first processor sends the target data to a target group through the WSS, the WSS may transmit the target data to two WSS ports corresponding to the target group, and one of the two WSS ports is a WSS port corresponding to an MEMS in the target group. Correspondingly, the first processor may send the first target data to the second processor sequentially through the optical transmission channels corresponding to the WSS and the MEMS. Another WSS port may be a WSS port corresponding to a node in the target group. Correspondingly, the first processor may directly send the first target data to the second processor through the optical transmission channel corresponding to the WSS. This can help improve flexibility of data transmission in model training, and reduce unnecessary bandwidth consumption. In this case, if a total quantity of available wavelengths in the WSS is limited, for example, when the total quantity of available wavelengths in the WSS is less than a total quantity of ports of the WSS, the total quantity W of groups may be set to 1/2 of the total quantity of available wavelengths in the WSS.

In a possible implementation, both training data and training models in any two processors of the $S \times C$ processors are different, and a collective communication manner between the $S \times C$ processors is alltoall; or training data in any two processors of the $S \times C$ processors is different, and a collective communication manner between the $S \times C$ processors is allreduce.

In a possible implementation, the target data includes one or more of a gradient, a feature, and a model parameter for model iteration, and the target data in a plurality of dimensions is exchanged between the processors. This helps improve model training efficiency and improve accuracy of a trained model.

According to a second aspect, this application provides a model training method, including:

A first processor of a first node performs model training in the first processor to obtain first target data. The first processor sends the first target data to a second processor of a second node through an optical transmission channel constructed by an MEMS. The MEMS is located between the first node and the second node, and the first target data is for the second processor to adjust a parameter for model training in the second processor.

In a possible implementation, that the first processor sends the first target data to a second processor of a second node through an optical transmission channel constructed by an MEMS includes: The first processor sends the first target data to the second processor through the optical transmission channel constructed by the MEMS and an intra-node channel. The intra-node channel includes a channel that is in the first node and that is between the first processor and the MEMS, and/or a channel that is in the second node and that is between the second processor and the MEMS.

In a possible implementation, that the first processor sends the first target data to a second processor of a second node through an optical transmission channel constructed by an MEMS includes: The first processor sends the first target data to the second processor sequentially through an optical transmission channel constructed by a WSS and the optical transmission channel constructed by the MEMS. The second node and the MEMS belong to a same group, and the WSS is located between the MEMS and the first node.

In a possible implementation, the WSS includes a mapping relationship between a wavelength of a carrier and a group, and in one mapping relationship, the wavelength of the carrier is a preset wavelength of a corresponding group. That the first processor sends the first target data to the second processor sequentially through an optical transmission channel constructed by a WSS and the optical transmission channel constructed by the MEMS includes: The first processor modulates the first target data into the carrier, and the wavelength of the carrier is a preset wavelength corresponding to a group to which the second node belongs. The first processor sends the carriers carrying the first target data to the WSS, so that the WSS sends the carrier carrying the first target data to the MEMS.

In a possible implementation, that a first processor of a first node performs model training in the first processor to obtain first target data includes: The first processor performs model training in the first processor to obtain intermediate data of the first processor; and the first processor determines the first target data based on a collective communication manner and the intermediate data of the first processor, where the first target data is all or a part of the intermediate data of the first processor. The training data and the training models in the first processor and the second processor are different, and the collective communication manner is alltoall; or training data in the first processor and the second processor is different, and the collective communication manner is allreduce.

In a possible implementation, that the first processor determines the first target data based on a collective communication manner and the intermediate data of the first processor includes: The first processor divides the intermediate data of the first processor based on the alltoall and a total quantity of processors corresponding to the alltoall. The processors corresponding to alltoall include the first processor and a second processor, a quantity of data parts after division is equal to the total quantity of processors, and the data after division includes first target data corresponding to the second processor.

In a possible implementation, alltoall corresponds to S nodes, the first node is an $s_1{}^{th}$ node in the S nodes, the second node is an $s_2{}^{th}$ node in the S nodes, $s_1$ and $s_2$ are set to every integer in [0, S], and si is less than $s_2$. The second processor is C processors included in the second node. The first target data is $(s_2 \times C)^{th}$ to $(s_2 \times C + C - 1)^{th}$ pieces of data in $S \times C$ pieces of data after the division.

In a possible implementation, the alltoall corresponds to W groups, the first node is an $s_1{}^{th}$ node of a $w_1{}^{th}$ group in the W groups, and the second node is an $s_2{}^{th}$ node of a $w_2{}^{th}$ group in the W groups, wi is set to every integer in [0, W-1], and $w_2 = w_1 + offset$, where $offset = ((s_2\%W) - (si\%W))\%W$.

In a possible implementation, that the first processor determines the first target data based on a collective communication manner and the intermediate data of the first processor includes: The first processor divides the intermediate data of the first processor based on the allreduce and a total quantity C of processors in the first node, to obtain C pieces of data. The first processor obtains $i^{th}$ data of other (C-1) processors in the first node through an intra-node channel of the first node. After the first processor performs summation on $i^{th}$ data in the C pieces of data and the $i^{th}$ data of the other (C-1) processors in the first node, the first target data is obtained. The first processor is an $i^{th}$ processor in the first node, and the second processor is an $i^{th}$ processor in the second node. In this way, when the first processor and the second processor belong to different nodes, the first processor may first obtain, through intra-node communication, a result of aggregation between $i^{th}$ data of the processors in the first node, that is, a result of data aggregation in the first node. Similarly, the second processor may also obtain a result of data aggregation in the second node. Then, the first processor and the second processor perform inter-node data aggregation. Specifically, the first processor may send the aggregation result (that is, the first target data) in the first node to the second processor, and the second processor may perform aggregation on the aggregation result in the first node and the aggregation result in the second node, to obtain a result of inter-node data aggregation.

In a possible implementation, the allreduce corresponds to the W groups, one group includes the S nodes, and one node includes the C processors. The first processor is an $i^{th}$ processor in a group to which the first processor belongs, and a second processor is an $i^{th}$ processor in a group to which the second processor belongs. That the first processor determines the first target data based on a collective communication manner and the intermediate data of the first processor includes: The first processor divides the intermediate data of the first processor based on the allreduce and the total quantity $S \times C$ of processors in the group, to obtain the $S \times C$ pieces of data. The first processor obtains, through the intra-node channel of the first node and/or optical transmission channels that are between the first node and other $(S-1)$ nodes in the group to which the first processor belongs and that are constructed by the MEMS, $i^{th}$ data of other $(S \times C-1)$ processors in the group to which the first processor belongs. The first processor performs summation on the $i^{th}$ data in the $S \times C$ pieces of data and the $i^{th}$ data of the other $(S \times C-1)$ processors in the group to which the first processor belongs, to obtain the first target data. In this way, when the first processor and the second processor belong to different groups, the first processor may first obtain, through intra-group communication, an aggregation result between $i^{th}$ data of the processors in the group to which the first processor belongs, that is, a result of intra-group data aggregation. Similarly, the second processor may also obtain a result of data aggregation in the group to which the second processor belongs. Then the first processor and the second processor perform inter-group data aggregation. Specifically, the first processor may send the intra-group aggregation result (that is, the first target data) obtained by the first processor to the second processor, and the second processor may perform aggregation on the intra-group data aggregation result and the intra-group data aggregation result corresponding to the second processor, to obtain an inter-group data aggregation result.

In a possible implementation, the method further includes: The first processor obtains second target data, where the second target data is data that is obtained by the second processor by performing model training in the second processor and that is to be transmitted to the first processor. The first processor adjusts a parameter for model training in the first processor based on the second target data. In this way, the first processor may determine aggregated data based on the second target data, and adjust the parameter for model training in the first processor based on the aggregated data.

In a possible implementation, before the first processor performs model training in the first processor to obtain first target data, the method further includes: The first processor divides a plurality of nodes into W groups based on a total quantity of the plurality of nodes for joint model training, a total quantity of ports of the WSS, and a total quantity of available wavelengths in the WSS. When the total quantity of available wavelengths in the WSS is less than the total quantity of the ports of the WSS, and one group in the W groups corresponds to two preset wavelengths, W is equal to 1/2 of the total quantity of available wavelengths in the WSS.

According to a third aspect, this application further provides a computing device. The computing device includes a processor and a memory, and may further include a communication interface. The processor executes program instructions in the memory to perform the method provided in the second aspect or any possible implementation of the second aspect. The memory is coupled to the processor, and stores program instructions and data that are necessary for performing a data processing process. The communication interface is configured to communicate with another device, for example, send first target data to a second node.

According to a fourth aspect, this application provides a computer-readable storage medium. When the computer-readable storage medium is executed by a computing device, the computing device performs the method provided in the second aspect or any possible implementation of the second aspect. The storage medium stores a program. The storage medium includes, but is not limited to, a volatile memory, for example, a random access memory, or a nonvolatile memory, such as a flash memory, a hard disk drive (hard disk drive, HDD), and a solid-state drive (solid-state drive, SSD).

According to a fifth aspect, this application provides a computing device program product. The computing device program product includes computer instructions, and when being executed by a computing device, the computing device performs the method provided in the second aspect or any possible implementation of the second aspect.

According to a sixth aspect, this application further provides a chip. The chip is connected to a memory, and the chip is configured to read and execute a software program stored in the memory, to perform the method in the second aspect or any possible implementation of the second aspect.

## BRIEF DESCRIPTION OF DRAWINGS

FIG. 1 is a schematic diagram of a structure of a neural network;
FIG. 2 is a schematic diagram of a stochastic gradient descent method in a neural network;
FIG. 3 is a schematic diagram of a data parallel training method;
FIG. 4 is a schematic diagram of a model parallel training method;
FIG. 5 is a schematic diagram of a first allreduce aggregation method;
FIG. 6 is a schematic diagram of a second allreduce aggregation method;

FIG. 7 is a schematic diagram of a third allreduce aggregation method;

FIG. 8 is a schematic diagram of an alltoall aggregation method;

FIG. 9 is a schematic diagram of a structure of an MEMS;

FIG. 10 is a schematic diagram of a structure of a WSS;

FIG. 11 is a schematic diagram of a structure of another WSS;

FIG. 12 is a schematic diagram of a scenario of a model training method;

FIG. 13 is a schematic diagram of connection of a fat-tree electrical switching network;

FIG. 14 is a schematic diagram of an architecture of a model training system according to this application;

FIG. 15 is a schematic diagram of node connections in a first model training system according to this application;

FIG. 16 is a schematic diagram of node connections in a second model training system according to this application;

FIG. 17 is a schematic diagram of node connections in a third model training system according to this application;

FIG. 18 is a schematic diagram of node connections in a fourth model training system according to this application;

FIG. 19 is a schematic diagram of data included in each NPU in a node according to this application;

FIG. 20A and FIG. 20B are a schematic diagram of an alltoall aggregation method according to this application;

FIG. 21 is a schematic diagram of a first allreduce aggregation method according to this application;

FIG. 22 is a schematic diagram of a second allreduce aggregation method according to this application;

FIG. 23 is a schematic diagram of an architecture of another model training system according to this application;

FIG. 24 is a schematic diagram of an architecture of still another model training system according to this application;

FIG. 25 is a schematic diagram of a method for aggregating data in an NPU through alltoall according to this application;

FIG. 26A, FIG. 26B, and FIG. 26C are a schematic diagram of a method for aggregating data in an NPU through allreduce according to this application;

FIG. 27 is a schematic diagram of another method for aggregating data in an NPU through allreduce according to this application;

FIG. 28 is a schematic flowchart of a model training method according to this application;

FIG. 29 is a schematic diagram of flow of target data in a model training method according to this application;

FIG. 30 is a schematic diagram of a structure of a model training apparatus according to this application; and

FIG. 31 is a schematic diagram of a structure of another model training apparatus according to this application.

## DESCRIPTION OF EMBODIMENTS

To better explain embodiments of this application, related terms or technologies in this application are first explained as follows.

I. Neural network

A neural network (neural network, NN) is a mathematical model for performing distributed parallel information processing algorithm by simulating behavior characteristics of animal neural networks. Information can be processed by adjusting an interconnection relationship between a large quantity of nodes in the neural network. The neural network has self-learning and self-adaptation capabilities.

Specifically, the neural network may usually include a plurality of layers connected end to end, for example, a convolution layer, a fully connected layer (fully connected layer, FC), an activation layer, or a pooling layer. Each layer may be expressed as a function $y = f_w(x)$, where f is a function of the function, the function f is derivable, w is a weight (or referred to as a weight tensor), x is an input (or referred to as an input tensor), and y is an output (or referred to as an output tensor).

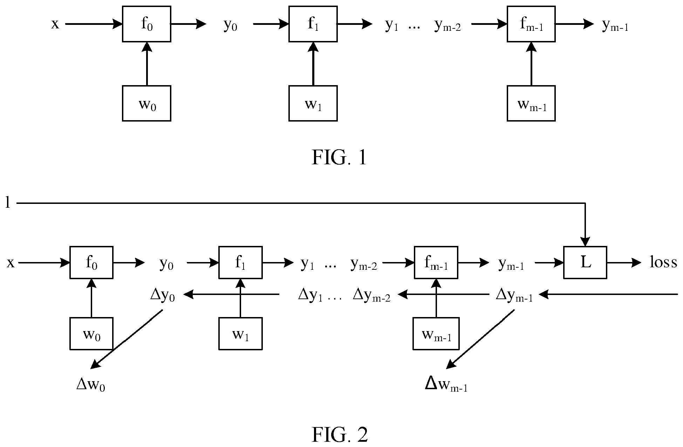

FIG. 1 is a schematic diagram of a structure of a neural network. The neural network may include m layers connected end to end, and m is an integer greater than or equal to 2. Layer 0 of the neural network may be expressed as a function $f_0$, an input of $f_0$ is x, an output is $y_0$, and a weight is $w_0$. Layer 1 of the neural network may be expressed as a function $f_1$, an input of $f_1$ is $y_0$, an output is $y_1$, and a weight is $w_1$, and the like.

II. Model training

It is assumed that there is a dataset $\{(x_0, l_0), ..., (x_{n-1}, l_{n-1})\}$, where $x_0$, ..., and $x_{n-1}$ are n inputs, and corresponding $l_0$, ..., and $l_{n-1}$ are expected outputs of the n inputs respectively, which are also referred to as labels (labels). Each $(x_j, l_j)$ is referred to as a piece of sample data.

Any input (which may be represented as $x_j$) in the dataset is input to layer m-1 of the neural network in FIG. 1, to obtain an output of the neural network. The output of the neural network may be represented as

6

$$y_{m-1}^j = f_{w_{m-1}}^{m-1}\left(\dots f_{w_1}^1\left(x_j\right)\right).$$

An objective of model training is to solve $w_0$, ..., and $w_{m-1}$, so that $y_{m-1}^j$ is closest to $l_j$ in a loss function L.

Further, a solving process may use a stochastic gradient descent (stochastic gradient descent, SGD) method shown in FIG. 2 as an example. The SGD method shown in FIG. 2 may include a forward propagation method and a backward propagation method.

Forward propagation method: Any input (which may be represented as $x_j$) in a dataset is input to the function $f_0$, so that the function $f_0$ outputs $y_0^j$; then, $y_0^j$ is input to a function $f_1$, so that the function $f_1$ outputs $y_1^j$; and by analogy, outputs respectively corresponding to functions $f_0$ to $f_{m-1}$ are obtained, that is, $y_0^j, y_2^j, \dots, y_{m-1}^j$. Then, a loss (loss) is calculated with reference to $l_j$ corresponding to $x_j$ and a loss function L.

Backward propagation: The chain rule is used to calculate a gradient $\Delta y_j$ of $y_j$ and a gradient $\Delta w_j$ of $w_j$ of each layer. Specifically, for example, a gradient $\Delta y_{m-1}$ of the layer m-1 is determined through loss and $y_{m-1}$, and then a gradient $\Delta w_{m-1}$ of the layer m-1 is determined through $\Delta y_{m-1}$ and $w_{m-1}$. By analogy, $\Delta y$ and $\Delta w$ of each layer are obtained, that is, $\Delta y_0$, $\Delta w_0$, ... ... , $\Delta y_{m-1}$, $\Delta w_{m-1}$ are obtained.

III. Data parallelism

In model training, K NPUs may be used for training a model together (or joint model training), where K is an integer greater than or equal to 2. In this application, the K NPUs may be represented as an NPUO, an NPU1, ..., and an NPU(K-1), or may be represented as a 0th NPU, a 1st NPU, ..., and a (K-1)th NPU. This description is also applicable to another example.

To make full use of a parallel computing capability inside each NPU, a dataset is usually divided into a plurality of subsets. A size of each subset is referred to as a batch size (batch size), and a subset may be denoted as a bs.

For the dataset, refer to the following expression 2:

$$\underbrace{\{(x_0, l_0), \dots, (x_{bs-1}, l_{bs-1})\}}_{bs0}, \underbrace{\{(x_{bs}, l_{bs}), \dots, (x_{2\times bs-1}, l_{2\times bs-1})\}}_{bs1}, \dots$$

bs0 may include bs pieces of sample data, and may be represented as $(x_0, l_0)$, ... , $(x_{bs-1}, l_{bs-1})$; and bs1 may also include bs pieces of sample data, and may be represented as $(x_{bs}, l_{bs})$, ... , $(x_{2\times bs-1}, l_{2\times bs-1})$, and the like.

During each model training, one bs may be input into the neural network, that is, an operation shown in FIG. 2 is performed based on the bs, to obtain $\Delta y$ and $\Delta w$ of each layer in the neural network corresponding to the bs.

To improve a training speed by using a plurality of NPUs, when the dataset is further increased, a layer, mini batch size, denoted as mbs, may further be added to the expression 2. In this way, a subset may further be divided into a plurality of mbss. For the dataset, refer to the following expression 3:

$$\underbrace{\underbrace{\{(x_0, l_0), \dots, (x_{mbs-1}, l_{mbs-1})\}}_{mbs0}, \dots, \underbrace{\{(x_{(K-1)\times mbs}, l_{(K-1)\times mbs}), \dots, (x_{K\times mbs-1}, l_{K\times mbs-1})\}}_{mbs(K-1)}, \dots}_{bs=K\times mbs}$$

The mbs pieces of sample data in mbs0 may be represented as $(x_0, l_0)$, ... , $(x_{mbs-1}, l_{mbs-1})$, and the mbs pieces of sample data in mbs1 may be represented as $(x_{mbs}, l_{mbs})$, ..., $(x_{2mbs-1}, l_{2mbs-1})$, and the like.

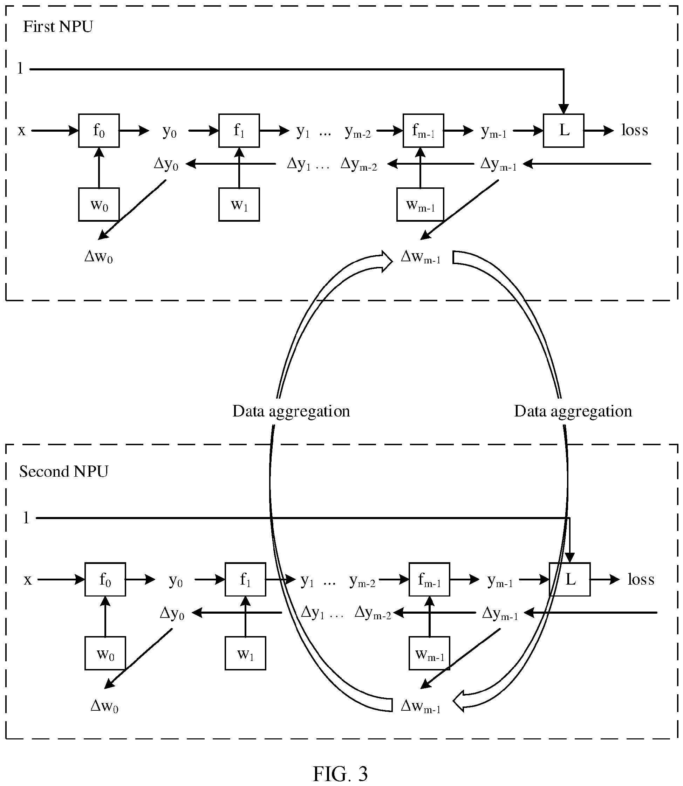

Correspondingly, in each training iteration of model training, K bss or the K mbss may be respectively input into the K NPUs, to complete parallel data training shown in FIG. 3. Neural networks (that is, model training processes) run in the NPU0 to the NPU(K-1) are the same, and sample data input into each NPU is different.

For any one of the K NPUs (which may be represented as an NPUk), a weight corresponding to the layer m-1 of a neural network of the NPU may be represented as $w_{m-1}^k$, and a weight gradient may be represented as $\Delta w_{m-1}^k$.

Correspondingly, after the K NPUs respectively obtain their respective $\Delta w_{m-1}$ through calculation, the K NPUs may perform data aggregation on the respective $\Delta w_{m-1}$, to obtain an input in a next round of model training. For example, each NPU may be $\Delta w_{m-1}$ of other (K-1) NPUs, and each NPU calculates an average value based on K $\Delta w_{m-1}$. For details,

refer to the following expression 4:

$$\Delta w_{m-1}^{average} = \frac{1}{K} \sum_{k=0}^{K-1} \Delta w_{m-1}^{k}$$

IV Model parallelism and hybrid parallelism

As a model scale further increases, for example, a quantity of model layers further increases, a processing capability of a single NPU cannot complete an operation of an entire model. In this case, the single model needs to be split into K NPUs, where K is an integer greater than or equal to 2. This calculation manner may be referred to as the model parallelism. Further, during model parallelism, the dataset may further be divided into K bss or K mbss, to combine the model parallelism and the data parallelism. This calculation manner may be referred to as hybrid parallelism.

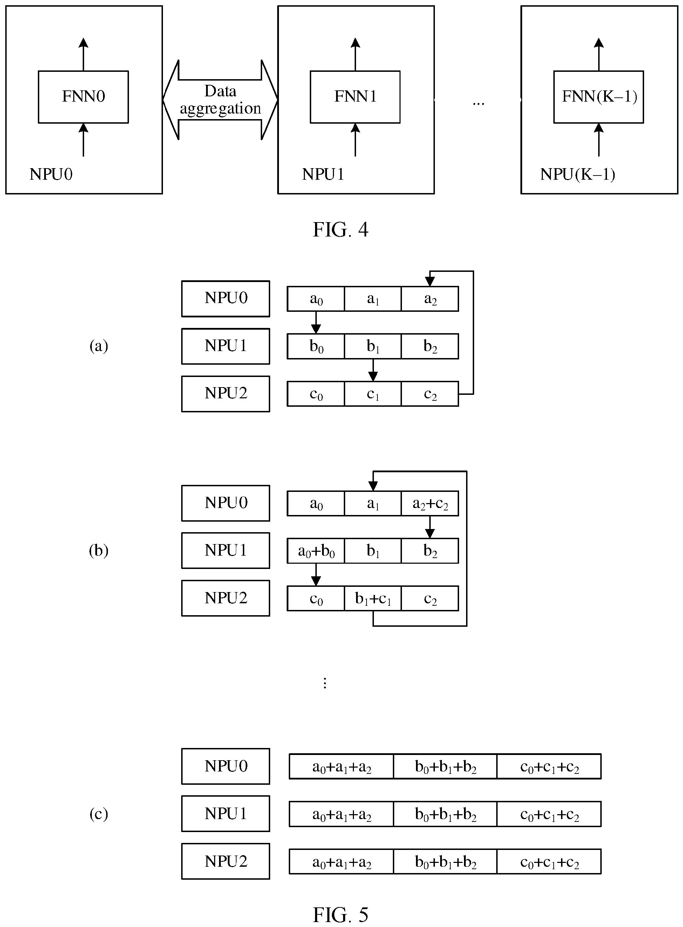

FIG. 4 is a flowchart of hybrid parallel training according to an example of this application. A feed-forward neural network (feed-forward network, FFN) run in each NPU is a different part of an entire model, and other layers are a plurality of copies of a same model. After the K NPUs obtain the respective $\Delta w_{m-1}$, the K NPUs can perform data aggregation based on the respective $\Delta w_{m-1}$, to obtain aggregated data. The aggregated data may be used for each NPU to adjust a parameter in a model of each NPU in a next iteration.

V. Collective communication (collective communication)

In a data parallel training process, a model parallel training process, or a hybrid parallel training process, intermediate data of the K NPUs needs to be aggregated. Intermediate data of each NPU may include one or more of a feature (feature or activation), a gradient, and a model parameter obtained through model training. The feature is, for example, a feature of training data learned through a model, the model parameter is, for example, a parameter w of a function f in a neural network, and the gradient is, for example, a difference $\Delta w_j$ of $w_j$ generated during backward propagation. For ease of description, the intermediate data may be referred to as data for short in the following.

Specifically, data aggregation between the K NPUs may be completed in a collective communication manner, to obtain the aggregated data. The collective communication manner (or referred to as a collective algorithm) may specifically include one or more of allreduce and alltoall.

1. Allreduce

The allreduce can be used for data aggregation in a case of data parallelism. Common allreduce includes ring allreduce, recursive halving and doubling, butterfly, and hierarchical allreduce.

(1) Ring allreduce

The ring allreduce is a logical ring formed by K NPUs (certainly, physical topology may not be a ring). Each NPU can divide data of the NPU into K pieces. Then, each NPU obtains data of the other (K-1) NPUs through the procedure shown in FIG. 5.

With reference to FIG. 5, there are three NPUs in total, that is, K=3, and the three NPUs are respectively represented as an NPU0, an NPU1, and an NPU2. The NPUO may divide data into $a_0$, $a_1$, and $a_2$; the NPU1 may divide data into $b_0$, $b_1$, and $b_2$; and the NPU2 may divide data into $c_0$, $c_1$, and $c_2$.

Refer to a first step shown in (a) in FIG. 5. The NPU0 transfers $a_0$ to the NPU1, and the NPU1 obtains $a_0+b_0$; the NPU1 transfers bi to the NPU2, and the NPU2 obtains $b_1+c_1$; the NPU2 transfers $c_2$ to the NPUO, and the NPU0 obtains $c_2+a_2$.

Refer to step 2 shown in (b) in FIG. 5. The NPU1 transfers $a_0+b_0$ to the NPU2, and the NPU2 obtains $a_0+b_0+c_0$; the NPU2 transfers $b_1+c_1$ to the NPU0, and the NPU0 obtains $b_1+c_1+a_1$; the NPU0 transfers $c_2+a_2$ to the NPU1, and the NPU1 obtains $a_2+b_2+c_2$.

By analogy, as shown in (c) in FIG. 5, each NPU may include the following three parts of same data: data of the NPU0, that is, $a_0+a_1+a_2$, data of the NPU1, that is, $b_0+b_1+b_2$, and data of the NPU2, that is, $c_0+c_1+c_2$.

(2) Recursive halving and doubling

Compared with ring allreduce, the recursive halving and doubling can reduce a quantity of transmission times between NPUs. Still using K NPUs as an example, each NPU may include data of the NPU, for example, an NPUk includes data k of the NPUk.

The principle of recursive halving and doubling is as follows.

Step 1: An $NPUk_1$ sends data $k_1$ to an NPUki-1. Correspondingly, the NPUki-1 uses a sum (represented as data $k_1+k_1-1$) of the local data $k_1-1$ and the data $k_1$ from the $NPUk_1$ as local data, to obtain a sum of data of two adjacent NPUs in the K NPUs. $k_1$ is greater than or equal to 1, and is less than or equal to K.

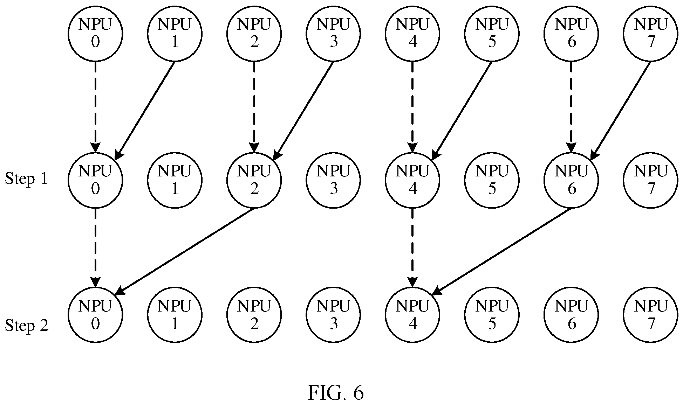

For details, refer to a first step in FIG. 6. An NPU1 sends data 1 to an NPU0, and the NPU0 uses a sum (represented as data 0+1) of local data 0 and the data 1 from the NPU1 as local data; an NPU3 sends data 3 to an NPU2, and the NPU2 uses a sum (represented as data 2+3) of local data 2 and the data 3 from the NPU3 as the local data.

Step 2: An $NPUk_2$ sends data $k_2$ to an $NPUk_2$-2. Correspondingly, the $NPUk_2$-2 uses a sum (represented as data $k_2+k_2-2$) of the local data $k_2-2$ and the data $k_2$ from the $NPUk_2$ as local data. The $NPUk_2$ is any one of a plurality of NPUs that receive data of other NPUs in step 1. In this way, a sum of data of four adjacent NPUs in the K NPUs is obtained.

For details, refer to step 2 in FIG. 6. The NPU2 sends data 2+3 to the NPU0, and the NPU0 may use a sum (represented as data 0+1+2+3) of local data 0+1 and the data 2+3 from the NPU2 as local data; an NPU6 sends data 6+7 to an NPU4, and the NPU4 may use a sum (represented as data 4+5+6+7) of local data 4+5 and the data 6+7 from the NPU6 as the local data, and so on.

In a manner similar to the step 1 and step 2, data of adjacent NPUs is sequentially summed, and finally data of the NPU0 to the NPU(K-1) is accumulated to the NPU0, that is, the NPU0 includes an accumulation result of the data of the NPU0 to the NPU(K-1). The accumulation result may be understood as an aggregation result of the K NPUs or aggregation data of the K NPUs.

Subsequently, each NPU distributes the accumulation result back to each NPU based on a sequence reverse to the foregoing data transmission sequence. In this way, all recursive halving and doubling are completed.

(3) Butterfly

Compared with the foregoing unidirectional transmission of recursive halving and doubling, bidirectional data exchange may be implemented in the butterfly. For example, in the step 1 in FIG. 6, the NPU1 no longer sends the data 1 to the NPU0, but the NPU1 exchanges data with the NPU0, that is, both the NPU0 and the NPU1 can obtain the data 0+1. Similarly, the NPU3 does not send the data 3 to the NPU2, but exchanges data with the NPU2, that is, both the NPU3 and the NPU2 can obtain the data 2+3.

The butterfly may include the following steps.

Step 1: The $NPUk_1$ exchanges local data with the NPUki-1 to obtain a sum of data of two adjacent NPUs in K NPUs. $k_1$ is greater than or equal to 1, and is less than or equal to K.

Step 2: The $NPUk_2$ exchanges local data with the $NPUk_2$-2 to obtain a sum of data of four adjacent NPUs in the K NPUs, where $k_2$ is greater than or equal to 2, and is less than or equal to K.

In a manner similar to the step 1 and step 2, data of adjacent NPUs is sequentially summed, so that each NPU in the NPU0 to the NPU(K-1) has an accumulation result of K pieces of data.

(4) Hierarchical allreduce

A plurality of NPUs may be assembled into a same node. Bandwidth between the plurality of NPUs in the same node is higher than bandwidth between NPUs in different nodes. The node may be understood as a computing node, a computing server, or the like.

When the plurality of NPUs perform data aggregation, the plurality of NPUs may sequentially perform first intra-node data aggregation, inter-node data aggregation, and second intra-node data aggregation.

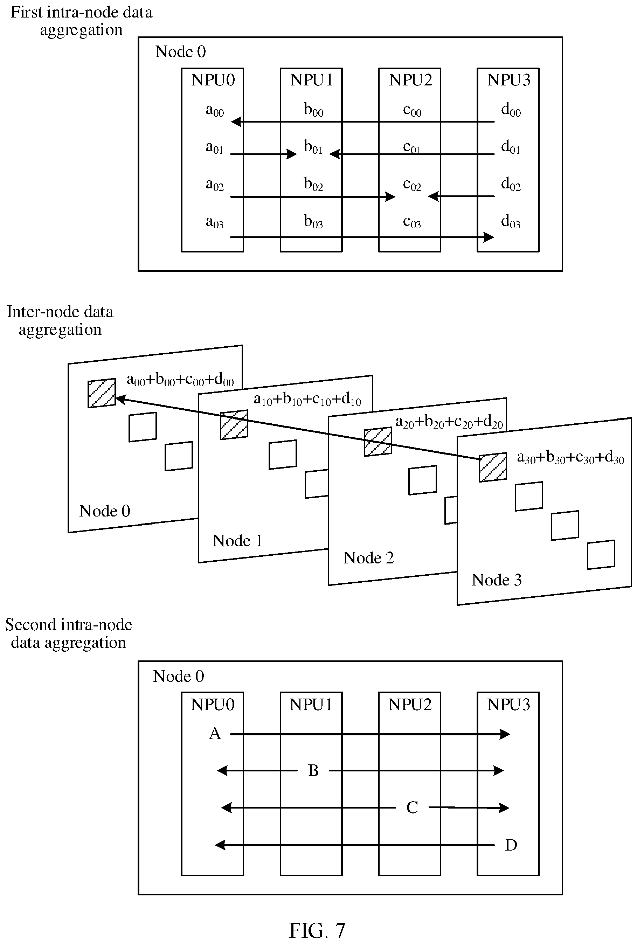

Refer to FIG. 7. The hierarchical allreduce collective communication manner is explained as follows.

A quantity of nodes is 4, the four nodes may be respectively represented as a node 0 to a node 3, each node includes four NPUs, and the four NPUs in each node may be represented as an NPU0 to an NPU3, and are distinguished based on a node to which the four NPUs belong.

In the first intra-node data aggregation:

for any node, each NPU divides data of the NPU into four pieces. An $i^{th}$ NPU obtains $i^{th}$ data in other NPUs in a current node, and accumulates the obtained $i^{th}$ data in the other NPUs and the $i^{th}$ data of the $i^{th}$ NPU.

For example, for the node 0, an NPU0 of the node 0 divides data into four pieces, which are respectively represented as $a_{00}$, $a_{01}$, $a_{02}$, and $a_{03}$; an NPU1 of the node 0 divides data into four pieces, which are respectively represented as $b_{00}$, $b_{01}$, $b_{02}$, and $b_{03}$; an NPU2 of the node 0 divides data into four pieces, which are respectively represented as $c_{00}$, $c_{01}$, $c_{02}$, and $c_{03}$; and an NPU3 of the node 0 divides data into four pieces, which are respectively

represented as $d_{00}$, $d_{01}$, $d_{02}$, and $d_{03}$.

The NPU0 of the node 0 respectively obtains $0^{th}$ data in the NPU1, the NPU2, and the NPU3 in the node 0, to obtain a sum of the $0^{th}$ data of all NPUs in the node 0, that is, $a_{00}+b_{00}+c_{00}+d_{00}$. The NPU1 of the node 0 respectively obtains $1^{st}$ data in the NPU0, the NPU2, and the NPU3 in the node 0, to obtain a sum of the $1^{st}$ data of the NPUs in the node 0, that is, $a_{01}+b_{01}+c_{01}+d_{01}$.

In inter-node data aggregation:

the $i^{th}$ NPU of each node performs data aggregation through inter-node bandwidth, where the collective communication manner may be implemented through one of the ring allreduce, recursive halving and doubling, or butterfly.

For example, in FIG. 7, a shadow part represents data obtained after the NPU0 of each node performs the first intra-node data aggregation. For example, the NPU0 of the node 0 obtains $a_{10}+b_{10}+c_{10}+d_{10}$ on the NPU0 of the node 1, $a_{20}+b_{20}+c_{20}+d_{20}$ on the NPU0 of the node 2, and $a_{30}+b_{30}+c_{30}+d_{30}$ on the NPU0 of the node 3. In addition, a sum is performed with the local $a_{00}+b_{00}+c_{00}+d_{00}$, to obtain a sum of data on the NPU0s of the four nodes, for example, represented as A. Correspondingly, the data A may also be obtained on the NPU0 of the node 1, the NPU0 of the node 2, and the NPU0 of the node 3, that is, the data of the NPU0 in each node is equal. Others are similar, to obtain data B on the NPU1 of each node, data C on the NPU2 of each node, and data D on the NPU3 of each node.

Subsequently, in the second intra-node data aggregation:

the $i^{th}$ NPU in each node distributes the $i^{th}$ data obtained by aggregating the inter-node data to another NPU in the current node. For example, in FIG. 7, the NPU0 of the node 0 distributes the data A to another NPU of the node 0. Correspondingly, the NPU0 of the node 0 may alternatively obtain data on the another NPU of the current node, and perform summation on the obtained data and the local data A, to obtain aggregated data, that is, A+B+C+D. Similarly, all other NPUs can obtain the data A+B+C+D.

Herein, the NPU in the node distributes data obtained by aggregating the inter-node data to another NPU in the current node. It may also be understood that this process is intra-node data distribution. This description may also be applicable to another example.

2. Alltoall

The alltoall can be used for data aggregation in hybrid parallel or model parallel cases.

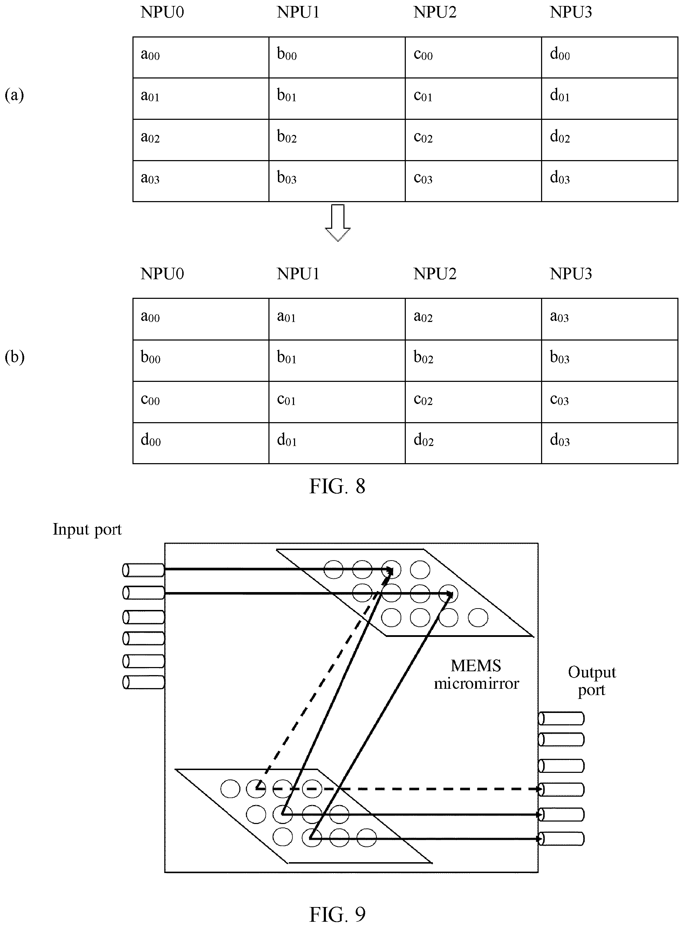

For example, the alltoall is performed on four NPUs, each NPU includes four pieces of data, and the four pieces of data respectively corresponding to the four NPUs can form a $4\times4$ data matrix. For details, refer to (a) in FIG. 8. The alltoall may be understood as that the data matrix is transposed. Specifically, after the data matrix in (a) in FIG. 8 is transposed, the data matrix may be shown in (b) in FIG. 8. Data in the NPU0 may be represented as $a_{00}$, $a_{01}$, $a_{02}$, and $a_{03}$. After the alltoall, $a_{00}$ is still in the NPU0, $a_{01}$ is transferred to the NPU1, $a_{02}$ is transferred to the NPU2, and $a_{03}$ is transferred to the NPU3.

6. Micro-electro-mechanical system (micro-electro-mechanical system, MEMS)

The MEMS is a type of optical cross-connect device (optical cross-connect, OXC), which can be used to deflect optical signals. FIG. 9 is a schematic diagram of a structure of an MEMS, including an MEMS micromirror, an input port, and an output port. An optical signal is input from the input port, reflected by the MEMS micromirror twice, and output from the output port.

The MEMS may implement deflection of the optical signal by adjusting an angle of the MEMS micromirror, so that the optical signal is output from different output ports, to implement optical path switching.

7. Wavelength selective switch (wavelength selective switch, WSS)

The WSS is also a type of OXC. The WSS can configure any wavelength to any port.

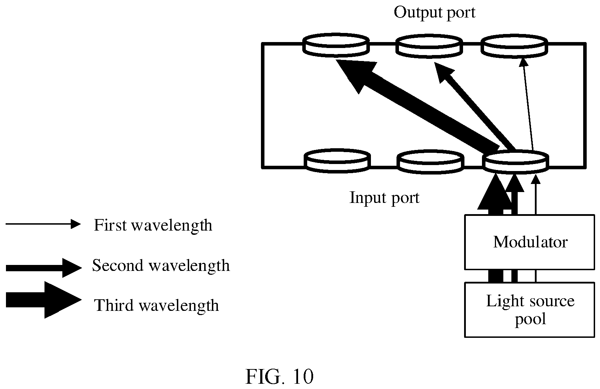

FIG. 10 is a schematic diagram of connection of a WSS, including a modulator, a light source pool, an input port, and an output port. An output port jointly corresponding to the input port and a wavelength is configured in the WSS. The light source pool can transmit optical signals of different wavelengths, and the optical signal can be used as a carrier to carry data. The modulator can modulate data to carriers of different wavelengths, and input the data through the input port. Further, the carrier may be output through the output port jointly corresponding to the input port and the wavelength.

With reference to an example in FIG. 10, carriers of three wavelengths may be input to a rightmost input port of the WSS, and the three wavelengths are respectively represented by arrows with different thicknesses. For example, in the three arrows, a finest arrow represents a first wavelength, an arrow with a middle thickness represents a second wavelength, and a thickest arrow represents a third wavelength. Further, the WSS may be configured with a rightmost input port and different output ports jointly corresponding to different wavelengths. For example, in the WSS, it is configured that the rightmost input port and the first wavelength jointly correspond to a rightmost output port, the rightmost input port and the second wavelength jointly correspond to an intermediate output port, and the rightmost input port and the third wavelength jointly correspond to a leftmost output port.

In this case, when the modulator modulates the data to the carrier corresponding to the first wavelength, the carrier is input through the rightmost input port, and is output through the rightmost output port. When the modulator modulates the data to the carrier corresponding to the second wavelength, the carrier is input through the rightmost input port, and is output through the intermediate output port. When the modulator modulates the data to the carrier corresponding to the third wavelength, the carrier is input through the rightmost input port, and is output through the leftmost output port.

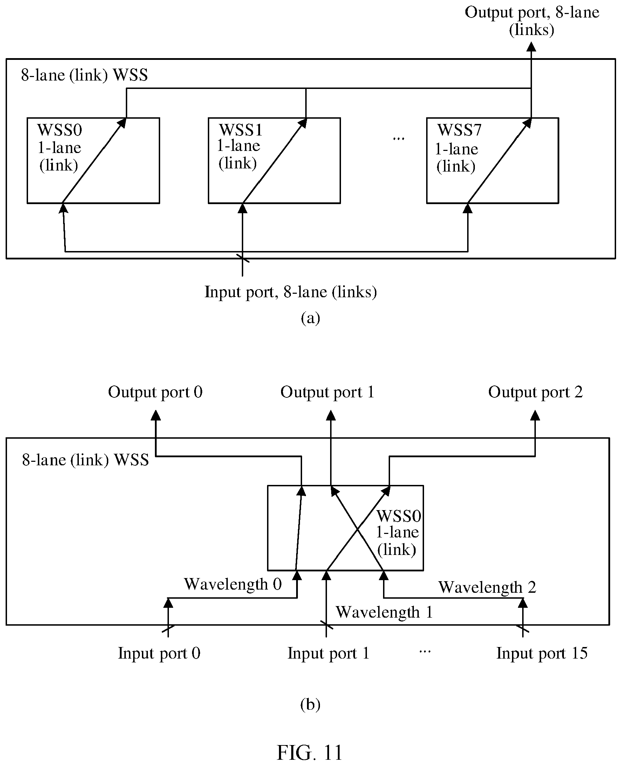

In a digital communication protocol, a valid communication port usually includes eight lanes of synchronized valid data. The eight lanes of synchronized valid data are input to an 8-lane WSS, and then are output from the 8-lane WSS. The 8-lane WSS is a WSS including eight lanes (links). The 8-lane WSS may include eight 1-lane WSSs. Refer to a schematic diagram of a structure of a WSS shown in (a) in FIG. 11.

With reference to (a) in FIG. 11, a transmit end inputs eight lanes of synchronized data to the 8-lane WSS through a communication port, and each lane of synchronized data is input to one 1-lane WSS. Then each lane of synchronized data is output from each 1-lane WSS, so that eight lanes of synchronized data output by the eight 1-lane WSSs are re-spliced at the output port.

Further, each 1 lane may correspond to one W-in-W-out WSS, where W is a positive integer, and each 1 lane may be configured to determine, based on a wavelength of a carrier and an input port, an output port to which data is to be transmitted. For details, refer to (b) in FIG. 11. For example, W=16, that is, a 16-in-16-out WSS may be connected to 16 input ports and 16 output ports. For any one of the input ports, the input port and a wavelength of a carrier may jointly correspond to one output port. For example, an input port 0 and a wavelength 0 jointly correspond to an output port 0, an input port 1 and a wavelength 1 jointly correspond to an output port 2, and an input port 15 and a wavelength 2 jointly correspond to an output port 1. In the foregoing description, one lane determines, based on a wavelength of a carrier and an input port, an output port to which data is to be transmitted, that is, implements a 16-in-16-out 1-lane WSS. Further, with reference to the example in (a) in FIG. 11, eight 1-lane WSSs form one 8-lane WSS, so that a 16-in-16-out 8-lane WSS can be implemented.

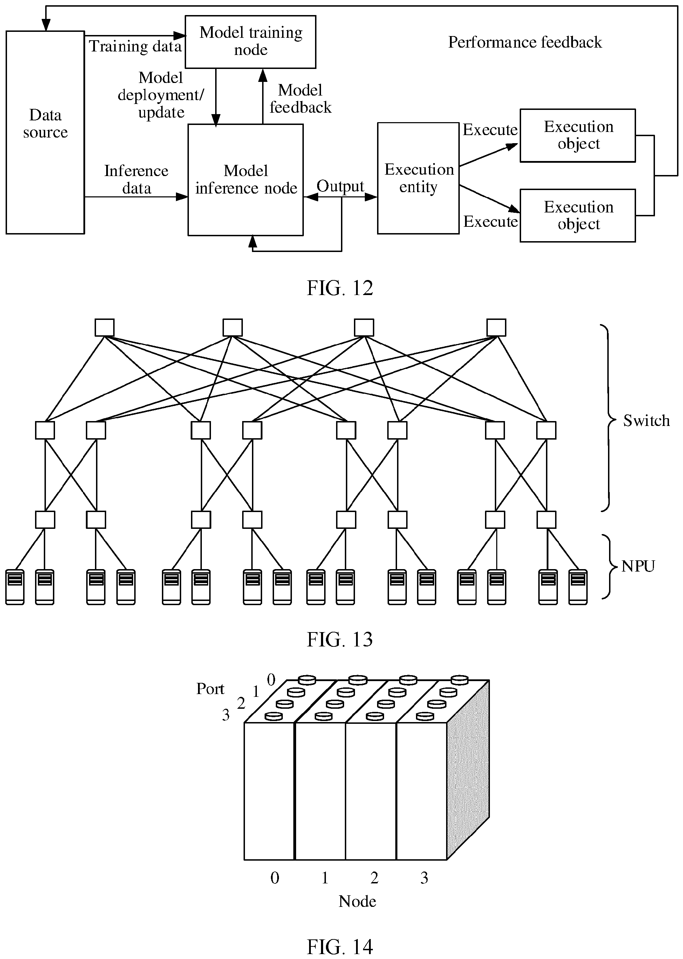

FIG. 12 is a schematic diagram of a model application scenario. A data source is used to store training data and inference data. A model training node analyzes or trains the training data provided by the data source to obtain a model, and deploys the model in a model inference node. The model indicates a mapping relationship between an input and an output of the model. Obtaining a model through learning by the model training node is equivalent to obtaining a mapping relationship between the input and the output of the model through learning by the model training node by using the training data. The model inference node uses the model to perform inference on the inference data provided by the data source and obtain an inference result. The method may also be described as follows: The model inference node inputs the inference data to the model, and obtains an output through the model. The output is the inference result. The inference result may indicate a configuration parameter used (executed) by an execution object, and/or an operation performed by the execution object. The inference result may be planned by an execution entity in a unified manner, and sent to one or more execution objects for execution. Further, the execution object may feed back a performance corresponding to the model to the data source, and the data source may further input the training data to the model training node, to further update the model.

In the model training, the model training node may include a plurality of NPUs. Each NPU may run different data (that is, data parallelism), or run different models (that is, model parallelism or hybrid parallelism). The plurality of NPUs may jointly train a model. Further, in each round of iteration of model training, the NPU needs to perform data aggregation on data obtained by executing a local model and data corresponding to another NPU, to update a model parameter in a next iteration.

Data aggregation between a plurality of NPUs can be implemented through a fat-tree (fat-tree) electrical switching network. Specifically, for the fat-tree electrical switching network, refer to FIG. 13. A bottom layer of a tree structure is a plurality of NPUs configured for model training, and the plurality of NPUs are connected by a switch above the plurality of NPUs. For example, one switch may have four ports, where two ports are connected downward to two NPUs, and other two ports are connected upward to two switches. Therefore, a plurality of switches in the tree structure may transmit data in one NPU to another NPU.

However, as a model training scale gradually increases, and NPU computing power continuously increases, an amount of data that needs to be forwarded by a switch sharply increases. Consequently, a line congestion problem may occur when the switch forwards data. In this way, data may not be efficiently transmitted between NPUs in model training.

Therefore, this application provides a model training system and method, to implement larger-scale model training and implement efficient data transfer between a large quantity of processors. The processor may be an NPU, a GPU, a CPU, or another device having a processing function. The following uses an NPU as an example for description.

Other processors are similar.

A model training system (hereinafter referred to as a system) in this application is first explained.

The system may include S nodes, one node may include C NPUs, and one NPU may further include P ports. Correspondingly, the system may include S×C NPUs, and each node may include C×P ports, where the ports may be input ports or output ports. S, C, and P are all positive integers.

FIG. 14 is a schematic diagram of a possible structure of a system according to an example of this application.

In an example, the system may include four nodes, each node includes two NPUs (which may be referred to as four nodes and two NPUs for short below), and each NPU includes two ports.

In another example, the system may include four nodes, each node includes four NPUs (which may be referred to as four nodes and four NPUs for short below), and each NPU includes one port.

The S nodes may be respectively corresponding to respective node numbers, and the C×P ports in each node may be respectively corresponding to respective port numbers. In the following, the S nodes may be sequentially referred to as a node 0, a node 1, a node 2, ..., and a node S-1, and the C×P ports in each node are sequentially referred to as a port 0, a port 1, a port 2, ..., and a port C×P-1.

It may be understood that all ports included in the S nodes may form a port matrix. For example, the system in FIG. 14 may correspond to a 4×4 port matrix, where a horizontal coordinate of the port matrix is a node number, and a vertical coordinate is a port number. Further, each port may be identified by a node number and a port number. For example, a port (x, y) can represent a port y in a node x, where $0 \leq x \leq S-1$, and $0 \leq y \leq C \times P-1$. With reference to FIG. 14, the port (0, 1) can represent the port 1 in the node 0.

Further, the system may further include an MEMS. The MEMS may be configured to construct an optical transmission channel between any two of the S nodes. It may also be understood that the MEMS implements connection between any two nodes, and NPUs in the two nodes may perform data aggregation through the optical transmission channel.

The following uses the node 0 and the node 1 in FIG. 14 as an example for description.

The node 0 includes a port (0, 0), the node 1 includes a port (1, 0), and the port (0, 0) may be connected to the port (1, 0) by the MEMS. Specifically, the MEMS includes a port M1 and a port M2 corresponding to each other. An optical signal input from the port M1 may be output through the port M2, or an optical signal input from the port M2 may be output through the port M1. The port (0, 0) is connected to the port M1, and the port (1, 0) is connected to the port M2. In this way, the node 0 may communicate with the node 1 through the optical transmission channel (that is, an optical transmission channel between the port M1 and the port M2) corresponding to the MEMS.

Further, this application provides the following two manners of constructing an optical transmission channel by the MEMS.

Manner 1: A port $(x_1, y)$ is connected to a port $(x_2, y)$ by the MEMS. $x_1$ and $x_2$ correspond to different nodes, $x_1$ and $x_2$ are both set to every integer in [0, S-1], and y may be set to every integer in [0, C×P-1].

Manner 2: A port (x, y) is connected to a port (y, x) by the MEMS.

With reference to the 4×4 port matrix shown in FIG. 14, the following explains how to implement connection between any two nodes by the MEMS in the foregoing manner 1 or manner 2.

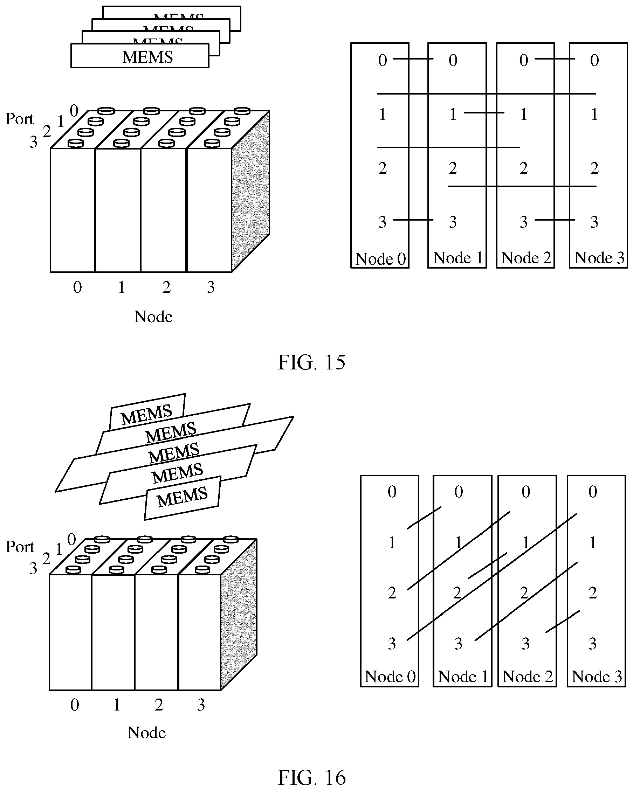

For a connection manner of manner 1, refer to FIG. 15.

All the port pairs of the port (0, 0) and the port (1, 0), a port (2, 0) and a port (3, 0), the port (0, 1) and a port (3, 1), a port (1, 1) and a port (2, 1), a port (0, 2) and a port (2, 2), a port (1, 2) and a port (3, 2), a port (0, 3) and a port (1, 3), and a port (2, 3) and a port (3, 3) can be connected by the MEMS.

Optionally, in the plurality of port pairs, port pairs corresponding to a same port number may be connected by a same MEMS. For example, a port number 0 corresponds to two port pairs: the port (0, 0) and the port (1, 0), and the port (2, 0) and the port (3, 0). The two port pairs can be connected by a same MEMS. In other words, the MEMS may implement communication between the port (0, 0) and the port (1, 0), and can further implement communication between the port (2, 0) and the port (3, 0). In this way, ports in the MEMS can be fully used, thereby helping reduce a quantity of MEMSs in the system.

For a connection manner of manner 2, refer to FIG. 16.

The port pairs of the port (0, 1) and the port (1, 0), the port (0, 2) and the port (2, 0), the port (0, 3) and the port (3, 0), the port (1, 2) and the port (2, 1), the port (1, 3) and the port (3, 1), and the port (2, 3) and the port (3, 2) can be separately connected by the MEMS.

Optionally, a plurality of port pairs can be connected by a same MEMS, for example, the port (0, 3) and the port (3, 0), and the port (1, 2) and the port (2, 1) may be connected by a same MEMS. That is, the MEMS may implement communication between the port (0, 3) and the port (3, 0), and may further implement communication between the port (1, 2) and the port (2, 1). In this way, ports in the MEMS can be fully used, thereby helping reduce a quantity of MEMSs in the system.

Certainly, there may be another connection manner in which the MEMS constructs an optical transmission channel. Examples are not provided in this application. An optical transmission channel constructed between any two of the plurality of nodes by the MEMS falls within the protection scope of this application.

The following explains how to implement connection between any two nodes by the MEMS in the manner 1 or manner 2 in a case of a larger node scale. Using an example of eight nodes and eight NPUs, each node includes eight NPUs, and each NPU includes one port, that is, each node includes eight ports. The eight nodes and eight NPUs may correspond to an $8\times8$ port matrix.

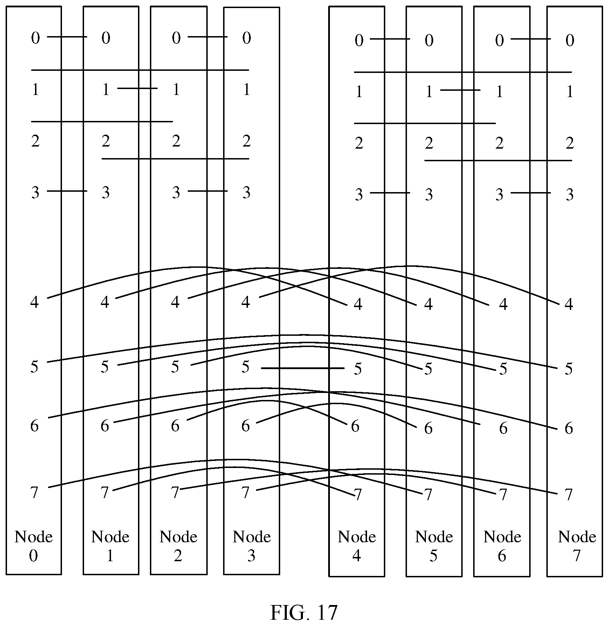

For a connection manner of manner 1, refer to FIG. 17.

In this application, a connection manner of eight nodes and eight NPUs may be obtained based on a connection manner of the $4\times4$ port matrix in FIG. 15. It may also be understood that a connection manner corresponding to the $4\times4$ port matrix may be used as a basic connection, and the system may complete extension based on the basic connection.

For example, the connection manner of the $4\times4$ port matrix may be used as a first port matrix in a connection manner of eight nodes and eight NPUs, and then the first port matrix is translated in a horizontal direction to obtain a second port matrix. In this way, a connection between the port 0 and the port 3 in eight nodes may be created.

Further, refer to the following steps to create a connection between the port 4 and the port 7 in the eight nodes, to obtain a complete connection manner of eight nodes and eight NPUs.

Step 1: Create a connection between a port (x, 4) and a port (x+4, 4), that is, a port pair is formed by connecting the port (x, 4) and the port (x+4, 4) by the MEMS, where $0\leq x\leq3$. For example, if x=1, the MEMS is connected to a port pair formed by a port (1, 4) and a port (5, 4), or the MEMS is connected to a port pair formed by a port (2, 4) and a port (6, 4).

Step 2: Create a connection relationship between ports y of the nodes based on a connection relationship between ports (y-4) of the nodes, and connect the nodes by the MEMS, where y is set to every positive integer from 5 to 7. Therefore, in the eight nodes corresponding to the port (y-4), connection between any two nodes can be implemented.

For example, a connection relationship between ports 5 of the nodes may be created based on a connection relationship between ports 1 of the nodes. For example, for the ports 1, the node 0 is connected to the node 3, the node 4 is connected to the node 7, and therefore, when the ports 5 are connected, the node 0 may be connected to the node 7, and the node 3 may be connected to the node 4. Further, the node 1 is connected to the node 2, the node 5 is connected to the node 6, and therefore, when the ports 5 are connected, the node 1 may be connected to the node 5, and the node 2 may be connected to the node 6.

In addition, the method in this application is further applicable to interconnection of other quantities of nodes and NPUs. A connection between ports on lower-half sides of the nodes may cross a left half side and a right half side.

The following uses a connection mode of an $S\times M$ port matrix as a basic connection to describe how to expand the port matrix to $2S\times2M$ based on the basic connection. S is a number of nodes, and M is a number of ports in a node, where $M=C\times P$.

First, the $S\times M$ port matrix is used as a first port matrix, and then the first port matrix is translated in a horizontal direction to obtain a second port matrix. In this way, connections between ports 0 to ports M-1 in the 2S nodes can be created.

Second, a connection between a port (x, M) and a port (x+S, M) is created, that is, a port pair is formed by the port (x, M) and the port (x+S, M) connected by the MEMS, where $0\leq x\leq M-1$.

Then, a connection relationship between ports y of the nodes is created based on a connection relationship between ports (y-M) of the nodes, and the ports y are connected by the MEMS, where y is set to every positive integer from (M+1) to (2M-1).

Specifically, when a port (y-M) of a node $x_1$ is connected to a port (y-M) of a node $x_2$, and a port (y-M) of a node $(x_1+N)$ is connected to a port (y-M) of a node $(x_2+N)$, a port y of the node $x_1$ may be connected to a port y of the node $(x_2+N)$, and a port y of the node $(xi+N)$ may be connected to a port y of the node $x_2$. Therefore, in the 2S nodes corresponding to the port (y-M), connection between any two nodes can be implemented.

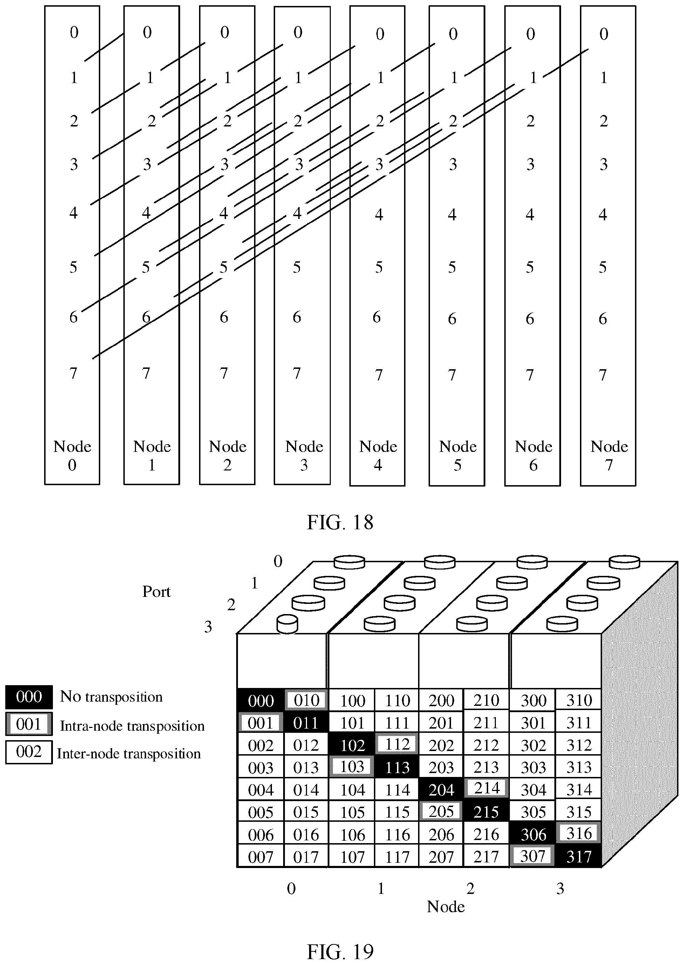

For a connection manner of manner 2, refer to FIG. 18.

The node $x_1$ includes a port $(x_1, y_1)$, the node $x_2$ includes a port $(x_2, y_2)$, where $x_1=y_2$ and $x_2=y_1$, and the MEMS is configured to connect the port $(x_1, y_1)$ and the port $(x_2, y_2)$. A specific connection manner is similar to that in FIG. 18.

In addition, to reduce a quantity of MEMSs, a plurality of port pairs may further be connected to a same MEMS. For example, in an example in FIG. 16, the port (0, 1) and the port (1, 0), and the port (1, 3) and the port (3, 1) may be jointly connected to one MEMS. Alternatively, the port (0, 1) and the port (1, 0), the port (1, 3) and the port (3, 1), and the port (2, 3) and the port (3, 2) may be jointly connected to one MEMS. Even when there are enough MEMS ports, a plurality of port pairs may be connected to a same MEMS. This is not limited in this application.

The foregoing describes how to construct an optical transmission channel between any two of a plurality of nodes by the MEMS. Subsequently, NPUs in the any two nodes can implement data aggregation between the plurality of NPUs through the optical transmission channel corresponding to the MEMS.

In a possible manner, each NPU in the system may run a model training of the NPU to obtain data corresponding to the NPU. Then, each NPU may perform data aggregation with another NPU based on a current collective communication manner and data obtained through model training of the NPU. The following describes different collective communication manners in different cases.

1. Alltoall

To implement data aggregation performed by a plurality of NPUs by through the alltoall, the NPU may divide data obtained by the NPU through model training into a plurality of parts, and a quantity of data parts obtained through division may be the same as a quantity of NPUs. The system includes S nodes, each node includes C NPUs, and each NPU may divide data of the NPU into $S \times C$ parts.

With reference to the system architecture in FIG. 14, a system includes a node 0 to a node 3. For example, a node 0 includes an NPU00 and an NPU01, a node 1 includes an NPU10 and an NPU11, a node 2 includes an NPU20 and an NPU21, and a node 3 includes an NPU30 and an NPU31. Further, each NPU may divide data of the NPU into eight parts. For example, the NPU00 divides data into 000 to 007, and the NPU01 divides data into 010 to 017. For details about data in each NPU, refer to an example in FIG. 19.

It may be understood that each NPU corresponds to eight parts of data of the NPU, and data in the eight NPUs may form an $8 \times 8$ data matrix. When the alltoall is performed, a transposition operation may be performed on the $8 \times 8$ data matrix.

In the S nodes, $(s_2 \times C)^{th}$ data to $(s_2 \times C+C-1)^{th}$ data of an $i^{th}$ NPU in an $s_1{}^{th}$ node are exchanged with $(s_1 \times C+i)^{th}$ data of all NPUs in an $s_2{}^{th}$ node, where si is set to every integer in [0, S-1], $s_2$ is set to every integer in [0, S-1], si is less than $s_2$, and i is set to every integer in [0, C-1].

With reference to the example in FIG. 19, for example, i=1, C=2, si=2, and $s_2$=3, 6th data (that is, 216) and 7th data (that is, 217) in a first NPU (that is, the NPU21) of the node 2 are exchanged with the $(s_1 \times C+i)^{th}$ data (that is, 305 and 315) of NPUs (that is, the NPU30 and the NPU31) of the node 3.

It may also be understood that, the system corresponds to the data matrix, and $C^2$ pieces of data on a diagonal in the data matrix are only limited to intra-node transposition or are not transposed, and $C^2$ pieces of data not on the diagonal may be transmitted to another node through inter-node transposition. Still with reference to the foregoing example, $C^2$=4, and four pieces of data on a diagonal of the node 0 are respectively 000, 001, 010, and 011, where 000 and 011 are not transposed, and 001 and 010 are still in a current node after transposition (that is, intra-node transposition occurs between 001 and 010). Four pieces of data not on the diagonal of the node 0, for example, 002, 003, 012, and 013, where 002 is transmitted to 100 of the node 1 after inter-node transposition, 003 is transmitted to 110 of the node 1 after inter-node transposition, 012 is transmitted to 101 of the node 1 after inter-node transposition, and 013 is transmitted to 111 of the node 1 after inter-node transposition.

In a specific implementation, the node includes $C^2 \times P \times C$ pieces of data, and the node performs division based on $C^2$ pieces of data included in each part of data, and determines how to perform transposition on each part of data. With reference to the example in FIG. 19, each node may divide 16 pieces of data in the node into four parts of data, and each part of data includes four pieces of data, and determine how to perform transposition on each part of data.

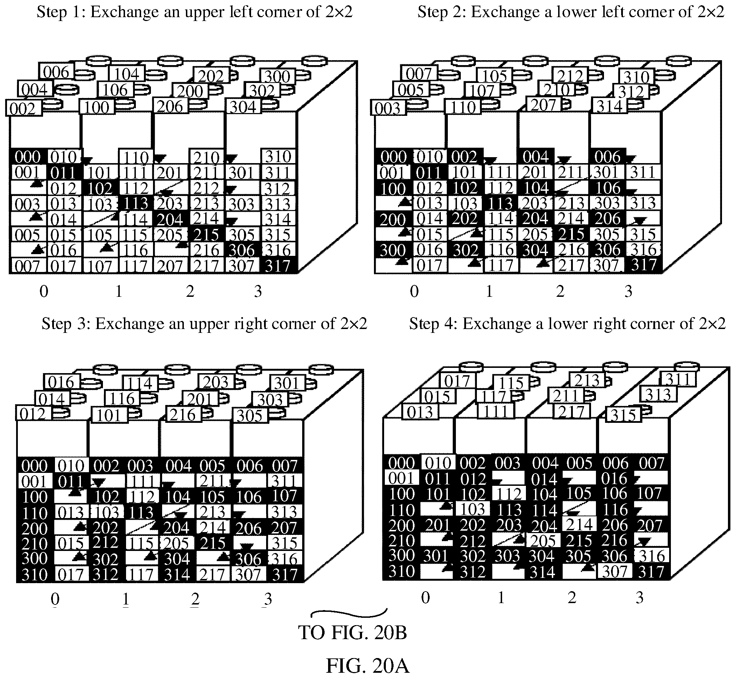

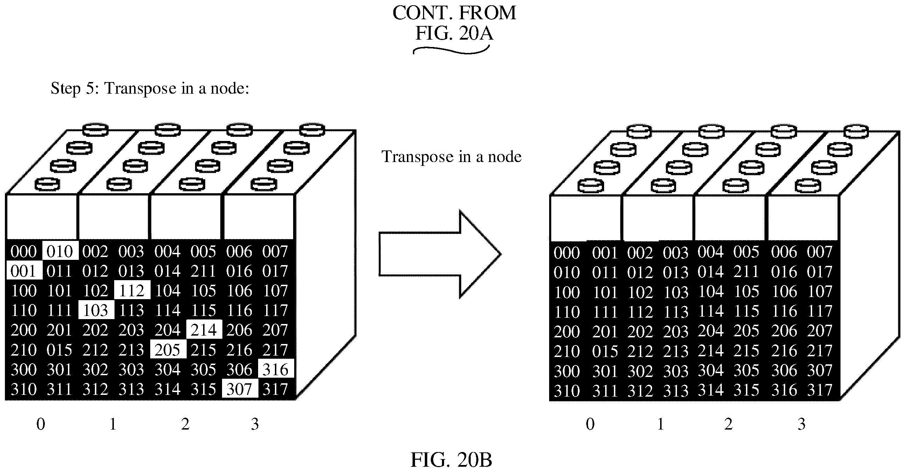

A part of data in the node 0 is used as an example for description, and the part of data includes 002, 003, 012, and 013. The part of data is not located on the diagonal of the data matrix, and the node 0 performs inter-node transposition. For details, refer to FIG. 20A and FIG. 20B.

Step 1: The node 0 may exchange data at an upper left corner of the part of data, that is, 002, with 100 in the node 1, so that 002 is exchanged from the node 0 to the node 1. Similarly, 100 is exchanged from the node 1 to the node 0.

Step 2: The node 0 may exchange data at a lower left corner of the part of data, that is, 003, with 110 in the node 1, so that 003 is exchanged from the node 0 to the node 1. Similarly, 110 is exchanged from the node 1 to the node 0.

Step 3: The node 0 may exchange data at an upper right corner of the part of data, that is, 012, with 101 in the node 1, so that 012 is exchanged from the node 0 to the node 1. Similarly, 101 is exchanged from the node 1 to the node 0.

Step 4: The node 0 may exchange data at a lower right corner of the part of data, that is, 013, with 111 in the node 1, so that 013 is exchanged from the node 0 to the node 1. Similarly, 111 is exchanged from the node 1 to the node 0.

Another part of data in the node 0 is used as an example for description, and the part of data includes, for example, 000, 001, 010, and 011. The part of data is located on the diagonal line of the data matrix, and is transposed in the node. For details, refer to step 5 shown in FIG. 20B.

001 and 010 are transposed in the node, and 000 and 011 are not transposed.

In another specific implementation, each NPU may divide data of the NPU into $C^2 \times P$ (that is, $S \times C$) parts,

where each part includes C parts of data, and each NPU may determine an NPU with which data is to be exchanged. For example, in FIG. 19, an NPU00 divides data into 000 to 007, and the NPU00 may determine that a position of 000 remains unchanged, exchange data between 001 and an NPU01 in a same node, exchange data between 002 and an NPU10 in a node 1, and the like.

2. Allreduce

The NPU may implement data aggregation according to the hierarchical allreduce shown in FIG. 7. Specifically, first intra-node data aggregation, inter-node data aggregation, and second intra-node data aggregation may be sequentially performed.

For the first intra-node data aggregation, refer to FIG. 7. In the node, one NPU divides data into a plurality of parts, and an obtained quantity of parts is the same as a quantity of NPUs included in the node. Then, the $i^{th}$ NPU in the node may obtain the $i^{th}$ data of another NPU in the node, to obtain a result of the first intra-node data aggregation.

After the first intra-node data aggregation is performed, the inter-node data aggregation needs to be performed. In this embodiment of this application, the inter-node data aggregation needs to be implemented through an inter-node channel, or through an inter-node channel and an intra-node channel.

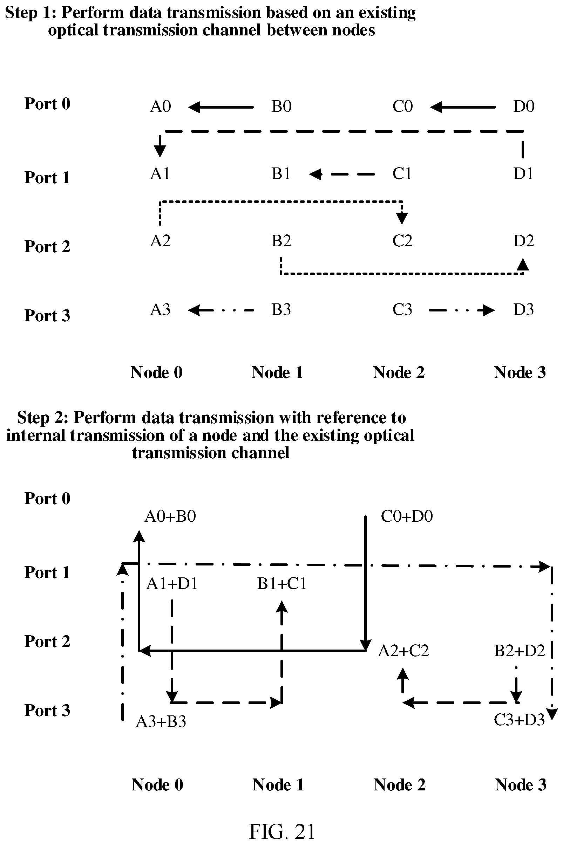

In a possible implementation, a quantity P of ports corresponding to the NPU is greater than or equal to 2. As shown in step 1 in FIG. 21, an NPU divides data of the NPU into P parts of data, and the P parts of data respectively correspond to P ports included in the NPU. That is, each NPU may complete aggregation of one part of data on each port included in the NPU.

In this way, data is transmitted between the plurality of NPUs through an inter-node channel, or through an inter-node channel and an intra-node channel, so that in a port matrix (or a data matrix), data corresponding to an $i^{th}$ port in each node may be accumulated to an NPU corresponding to an $i^{th}$ port in an $i^{th}$ node.

Then, the NPU including the accumulated data may transfer, based on the inter-node channel and/or the intra-node channel again, the accumulated data to another NPU of a current node, or transfer the accumulated data to an NPU of another node.

In a case of four nodes and two NPUs, one NPU includes two ports, and a connection relationship of a 4×4 port matrix is shown in FIG. 15. For a node 0, data A0 and A1 of an NPU00 may respectively correspond to a port 0 and a port 1; and data A2 and A3 of an NPU01 may respectively correspond to a port 2 and a port 3. For a node 1, data B0 and B1 of an NPU10 may respectively correspond to the port 0 and the port 1; and data B2 and B3 of an NPU11 may respectively correspond to the port 2 and the port 3. For a node 2, data C0 and C1 of an NPU20 may respectively correspond to the port 0 and the port 1; data C2 and C3 of an NPU21 may respectively correspond to the port 2 and the port 3. For a node 3, data D0 and D1 of an NPU30 may respectively correspond to the port 0 and the port 1; and data D2 and D3 of an NPU31 may respectively correspond to the port 2 and the port 3. For a data matrix formed by data in each node, refer to step 1 in FIG. 21.

For ease of description, the following uses data transmission between nodes as an example to describe the allreduce. When the node transmits data, the node may further correspond to an NPU in the node for data transmission. For example, when the node 0 transmits the data A1, specifically, the NPU00 transmits the data A1. For another example, when the node 1 transmits the data B2, specifically, the NPU11 transmits the data B2.

Step 1: Perform data transmission based on an existing optical transmission channel between nodes.

Arrow directions in FIG. 21 represent data transfer and accumulation operations.

The following is implemented through an optical transmission channel corresponding to the port 0 in the node. The node 1 transmits the data B0 to the node 0, and the node 0 performs summation on the data B0 and the local data A0 to obtain data A0+B0. The node 3 transmits the data D0 to the node 2, and the node 2 performs summation on the data D0 and the local data C0 to obtain data C0+D0.

The following is implemented through an optical transmission channel corresponding to the port 1 in the node. The node 3 transmits the data D1 to the node 0, and the node 0 performs summation on the data D1 and the local data A1 to obtain data A1+D1. The node 2 transmits the data C1 to the node 1, and the node 1 performs summation on the data C1 and the local data B1 to obtain data C1+B1.

Similarly, the following may be implemented through an optical transmission channel corresponding to the port 2 in the node. The node 2 includes data A2+C2, and the node 3 includes data B2+D2. The following is implemented through an optical transmission channel corresponding to the port 3 in each node. The node 0 includes data A3+B3, and the node 3 includes data C3+D3.

Step 2: Perform data transmission with reference to internal transmission of the node and the existing optical transmission channel.

Vertical arrows in FIG. 21 represent data transmission within a single node. Horizontal arrows still represent data transmission on the optical transmission channel. In this case, data transmission between two NPUs that are not directly connected to the optical transmission channel is completed through a longitudinal detour.

The following is implemented through the optical transmission channel corresponding to the port 2 in the node. The node 2 transmits data C0+D0 to the node 0, and the node 0 performs summation on the data C0+D0 and local data A0+B0 to obtain data A0+B0+C0+D0.

It should be noted that, the data transmission is actually that the NPU20 in the node 2 transmits the data C0+D0 to the NPU00 in the node 0. The NPU20 corresponds to the port 0 and the port 1 of the node 2, and the NPU00 corresponds to the port 0 and the port 1 of the node 0. With reference to the connection relationship in FIG. 15, the NPU20 and the NPU00 are not directly connected by an MEMS. To implement that the NPU20 transmits the data C0+D0 to the NPU00, the NPU20 may first transmit the data C0+D0 to the NPU21 in a same node through the intra-node channel. The NPU21 corresponds to the port 2 and the port 3. The NPU21 may transmit the data C0+D0 to the node 0 through the MEMS between the port 2 of the node 2 and the port 2 of the node 0. Similarly, in the node 0, the NPU01 receives the data C0+D0 through the port 2, and transfers the data C0+D0 to the NPU00. The description of intra-node transmission is also applicable to other steps in this application.

The following is implemented through an optical transmission channel corresponding to the port 3 in the node. The node 0 transmits data A1+D 1 to the node 1, and the node 1 performs summation on the data A1 +D 1 and local data C1+B1 to obtain data A1+B1+C1+D1.

Similarly, the following is implemented through the optical transmission channel corresponding to the port 3 in the node. The node 2 includes data A2+B2+C2+D2. The following is implemented through the optical transmission channel corresponding to the port 1 in the node. The node 3 includes data A3+B3+C3+D3.

In the foregoing manner, it can be implemented that data corresponding to a port 0 of each node is accumulated to the node 0, data corresponding to a port 1 of each node is accumulated to the node 1, data corresponding to a port 2 of each node is accumulated to the node 2, and data corresponding to a port 3 of each node is accumulated to the node 3.

Specifically, the NPU00 includes the data A0+B0+C0+D0, the NPU10 includes the data A1+B1+C1+D1, the NPU21 includes the data A2+B2+C2+D2, and the NPU31 includes the data A3+B3+C3+D3. The NPUs may transfer respective data to another NPU in the node and an NPU in another node based on a previous transmission route.

In still another possible implementation, the NPU includes one port, and the NPU may directly perform the inter-node data aggregation. For example, in a case of four nodes and four NPUs, a connection relationship of a 4×4 port matrix is shown in FIG. 15. For the node 0, the NPU00 to the NPU03 may respectively correspond to the data A0 to A3, and respectively correspond to the port 0 to the port 3 of the node 0. For the node 1, the NPU10 to the NPU13 may respectively correspond to the data B0 to B3, and respectively correspond to the port 0 to the port 3 of the node 1, and the like. Still refer to data flows in FIG. 21. A difference lies in that when data flows between nodes or in a node, NPUs corresponding to the data may be different.

Further, the hierarchical allreduce may further be applicable to larger-scale data aggregation. An example in which eight nodes and eight NPUs correspond to an 8×8 port matrix is used. A connection relationship of the 8×8 port matrix is shown in FIG. 17. For the node 0, the NPU00 to the NPU07 may respectively correspond to the data A0 to A7, and respectively correspond to the port 0 to the port 7 of the node 0. For the node 1, the NPU10 to the NPU17 may respectively correspond to the data B0 to B7, and respectively correspond to the port 0 to the port 7 of the node 1, and the like.

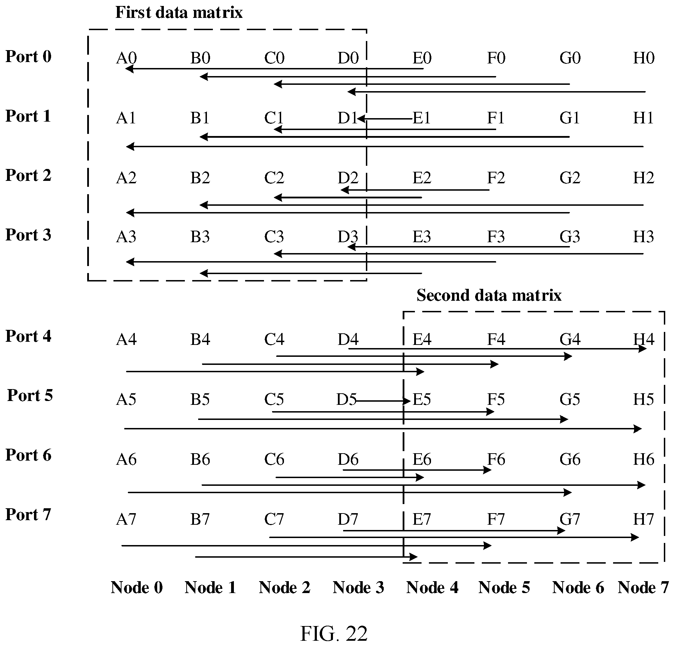

For data flows between nodes, refer to FIG. 22.

Step 1: The node 0 to the node 7 jointly determine a first data matrix.

The node 4 transmits data E0 in the node 4 to the node 0 through an optical transmission channel between the node 4 and the node 0, an internal channel of the node 4, and an internal channel of the node 0, so that the node 0 obtains data A0+E0. In this step, an internal channel of the node 4 may be an NPU44 to an NPU04. An optical transmission channel exists between the port 4 of the NPU44 and the port 4 of the NPU04. That is, the NPU40 transmits the data E0 to the NPU44, and the NPU44 transmits the data E0 to the NPU04 through the optical transmission channel. Further, an internal channel of the node 0 may be the NPU04 to an NPU00, that is, the NPU04 may receive the data E0 from the NPU44 through an optical transmission channel, and then transmit the data E0 to the NPU00 through the internal channel of the node 0.

The node 5 transmits data F0 in the node 5 to the node 1 through an optical transmission channel between the node 5 and the node 1, an internal channel of the node 5, and an internal channel of the node 1, so that the node 1 obtains data B0+F0. For details of the internal channel of the node 5 and the internal channel of the node 1, refer to the description of the internal channel of the node 4 and the internal channel of the node 0.

By analogy, the first data matrix can be obtained, where the NPU00 includes A0+E0, and the NPU01 includes A1+H1; the NPU02 includes A2+G2, and the NPU03 includes A3+F3; the NPU10 includes B0+F0, the NPU11 includes B1+G1, the NPU12 includes B2+H2, and the NPU13 includes B3+E3; and others are similar.

Step 2: The node 0 to the node 7 jointly determine a second data matrix.

The node 0 sends data A4 of the node 0 to the node 4 through the optical transmission channel between the node 0 and the node 4, so that the node 4 can obtain A4+E4.

The node 1 sends data B4 of the node 1 to the node 5 through the optical transmission channel between the node 1 and the node 5, so that the node 5 can obtain B4+F4.

By analogy, the second data matrix can be obtained, where the NPU44 includes A4+E4, the NPU45 includes D5+E5, the NPU46 includes C6+E6, the NPU47 includes B7+E7, and others are similar.

Step 3: Based on steps similar to those in FIG. 21, summation on diagonals in the first data matrix is completed, that is, data corresponding to an $i^{th}$ port of each node in the first data matrix may be accumulated to an NPU corresponding to an $i^{th}$ port of an $i^{th}$ node. For example, data in the port 0 of each node is accumulated to the NPU corresponding to the port 0 of the node 0, that is, the NPU00 includes data A0+B0+C0+D0+E0+F0+G0+H0. For another example, it is implemented that data in the port 1 of each node is accumulated to the NPU corresponding to the port 1 of the node 1, that is, the NPU11 includes data A1+B1+C1+D1+E1+F1+G1+H1. Then, data in each NPU on the diagonal of the first data matrix is reversely transferred to an NPU of another node based on an original route.

Then, based on steps similar to those in FIG. 21, summation on diagonals in the second data matrix is completed, that is, data corresponding to an $i^{th}$ port of each node in the second data matrix may be accumulated to an NPU corresponding to an $i^{th}$ port of an $i^{th}$ node. For example, data in the port 4 of each node may be accumulated to an NPU corresponding to the port 4 of the node 4, that is, the NPU44 includes data A4+B4+C4+D4+E4+F4+G4+H4. For another example, data in the port 5 of each node is accumulated to the NPU corresponding to the port 5 of the node 5, that is, the NPU55 includes data A5+B5+C5+D5+E5+F5+G5+H5. Then, the data in each NPU on the diagonal of the second data matrix is reversely transferred to an NPU of another node based on the original route.

In addition, the foregoing uses the port connection relationship in FIG. 15 or FIG. 17 as an example to describe a data aggregation manner between NPUs. This embodiment of this application is also applicable to the connection manner shown in FIG. 16 or FIG. 18, or is further applicable to another connection manner. As long as during inter-node data aggregation, two nodes (or NPUs in the two nodes) perform data transmission through the optical transmission channel constructed by the MEMS between the two nodes, this falls within the protection scope of this application. Further, when two nodes (or NPUs in the two nodes) perform data transmission, data transmission in an internal channel of the nodes may further be involved. For details, refer to the descriptions in the foregoing embodiment.

In the foregoing technical solution, the MEMS constructs an optical transmission channel between any two nodes, so that the any two nodes can perform data transmission based on the optical transmission channel between the any two nodes.

However, it should be noted that angle adjustment of the MEMS micromirror takes a relatively long time, for example, it takes hundreds of milliseconds to switch output from an original output port to another output port. Therefore, a connection relationship between the node and the MEMS is generally configured before model training, and data aggregation is performed by using the preconfigured connection relationship during model training. That is, the optical transmission path corresponding to the MEMS is fixed during model training.

For example, a node includes eight NPUs, and each NPU includes four ports. In this case, one node has 32 ports, and the 32 ports correspond to 32 nodes. In this case, a formed system may include 32 nodes×8 NPUs, that is, 256 NPUs. In this case, interconnection between the 256 NPUs may be implemented by the MEMS.

To further expand a scale of interconnection between NPUs in the model training, a WSS is further introduced in this application, and the WSS can expand a node scale (or an NPU scale) to W times of an original node scale. Specifically, the original S nodes and the MEMS may form a group (referred to as a first group). After the WSS is introduced, the system may add (W-1) extended groups based on the first group, and each extended group may include a same quantity of nodes and a same quantity of MEMSs.

Alternatively, it may be understood that a system may include W×S nodes, each node has a node number, and a modulo operation may be performed on W based on the node number, so that the W×S nodes are respectively divided into the W groups.

To distinguish a port in a node (or an NPU), a port in a WSS, and a port in an MEMS, the port in the node (or the NPU) is referred to as a node port, the port in the WSS is referred to as a WSS port, and the port in the MEMS is referred to as an MEMS port.

The WSS may be configured to implement connection between any two of the W groups. In a possible implementation, a quantity of WSSs included in the system is the same as a total quantity of node ports included in each group.

In a possible implementation, in each of the W groups, node ports located at corresponding positions are connected to a same WSS, where a position of the node port may be determined through a specific node in which the node port is located in the group and a specific node port located in the node.

For example, node ports that are in the W groups and that are located at corresponding positions may be connected to W WSS ports at a same end of the same WSS, and W WSS ports at the other end of the WSS are connected to one MEMS in each of the W groups. In this way, the WSS may connect any two of the W groups.

For example, one WSS includes W first WSS ports and W second WSS ports. The W first WSS ports are respectively connected to W node ports, the W node ports respectively belong to the W groups, and positions of the W node ports in respective groups are corresponding. The W node ports correspond to respective MEMS ports in respective groups, and MEMS ports corresponding to the W node ports are respectively connected to W second WSS ports.

The following uses W=2 as an example to describe an implementation in which the WSS is connected to two groups.

The WSS may include two first WSS ports and two second WSS ports, and the WSS can expand a node scale to twice an original node scale. For example, if the original node scale is four nodes, the node scale can be expanded to eight nodes after the WSS is introduced. For example, the eight nodes may be respectively represented as a node 0, a node 1, a node 2, ..., and a node 7. A modulo operation may be performed on W=2 based on node numbers of the nodes, so that the eight nodes are divided into the two groups. The two groups may be separately represented as a group 0 and a group 1. The group 0 includes the node 0, the node 2, the node 4, and the node 6, and the group 1 includes the node 1, the node 3, the node 5, and the node 7.

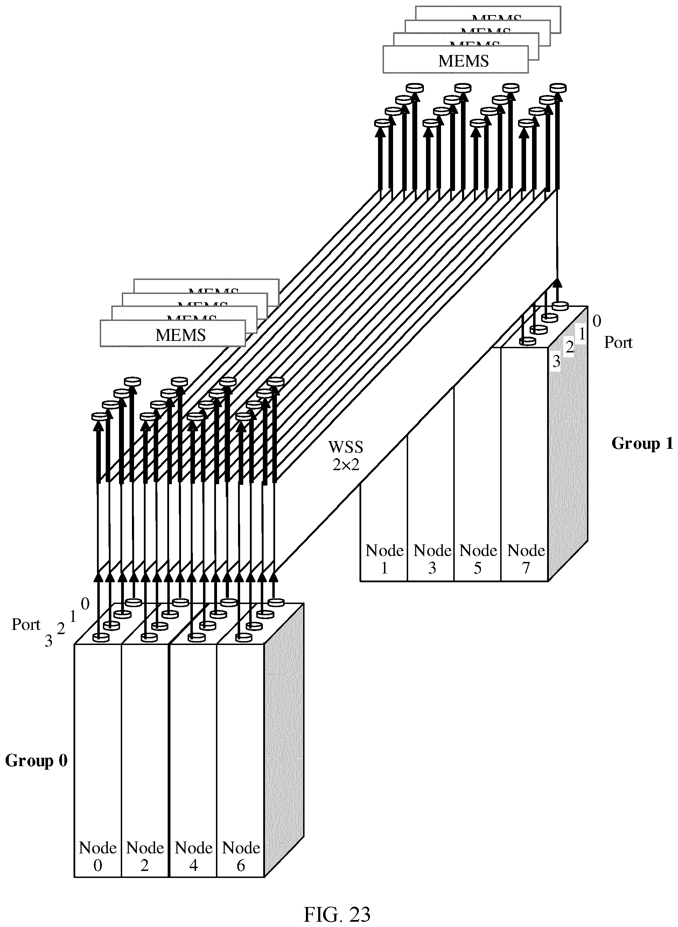

Further, with reference to a connection relationship shown in FIG. 23, how the WSS connects the group 0 and the group 1 together is explained. Each group includes 16 node ports, and a quantity of WSSs included in a system is the same as a quantity of nodes in the group, that is, the system includes 16 WSSs. Node ports located at corresponding positions in each group may be connected to a same WSS. For example, a node port (6, 0) and a node port (7, 0) are located at corresponding positions in the two groups, that is, located at a $0^{th}$ port in a third node in respective groups, and may be connected to a same WSS. For example, a node port (6, 1) and a node port (7, 1) are located at corresponding positions in the two groups, that is, located at a $1^{st}$ port in the third node in respective groups, and may be connected to a same WSS.

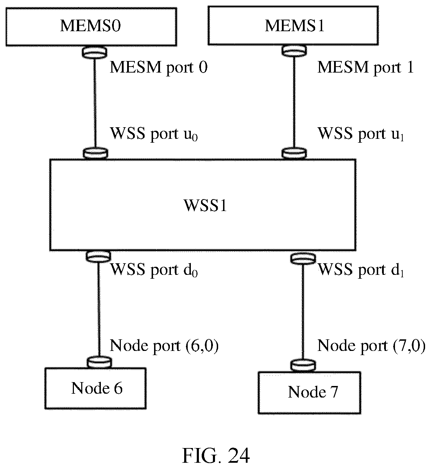

The WSS between the node port (6, 0) and the node port (7, 0) is used as an example to explain and describe connection relationships between the WSS and a group 0 and a group 1 respectively. Refer to FIG. 24. The WSS may be represented as a WSS1, and there are two WSS ports below the WSS1, which may be respectively represented as a WSS port $d_0$ and a WSS port $d_1$. Similarly, there are two WSS ports above the WSS1, which may be respectively represented as a WSS port $u_0$ and a WSS port $u_1$. Further, the WSS port $d_0$ and the WSS port $d_1$ are respectively connected to the node port (6, 0) and the node port (7, 0). The WSS port $u_0$ and the WSS port $u_1$ are respectively connected to two MEMS ports (which may be respectively represented as an MEMS port 0 and an MEMS port 1). The two MEMS ports are respectively an MEMS0 in the group 0 and an MEMS 1 in the group 1.

Further, the WSS can implement data transmission (or inter-group data transmission, or inter-group data aggregation) between any two groups, or can further implement data transmission (or intra-group data transmission, or intra-group data aggregation, or inter-node data transmission, or inter-node data aggregation) between different nodes in any group.

The following first describes one WSS.

The WSS may include W WSS input ports and W WSS output ports. For one of the WSS input ports, W carriers with different wavelengths may be input to the WSS input port. Based on an output port corresponding to both the WSS input port and the wavelength of the carrier, the W carriers with different wavelengths may be output through the W different WSS output ports.

Specifically, a plurality of mapping relationships may be preset in the WSS, and each mapping relationship may include a WSS input port, a wavelength, and a WSS output port that is jointly corresponding to the WSS input port and the wavelength. It may also be understood that one WSS input port may be separately combined with W wavelengths, and the obtained W combinations may be respectively corresponding to the W WSS output ports.

In a possible implementation, each WSS input port may correspond to one group (which may be referred to as a source group), and each WSS output port may also correspond to one group (which may be referred to as a target group). Further, each group may correspond to a preset wavelength of the group, and a wavelength in a mapping relationship of the WSS may be specifically a preset wavelength corresponding to the target group. That is, a mapping relationship of the WSS may be specifically a mapping relationship between the WSS input port corresponding to the source group, the wavelength corresponding to the target group, and the WSS output port corresponding to the target group.

With reference to examples in FIG. 23 and FIG. 24, for example, the group 0 corresponds to a preset wavelength 0, and the group 1 corresponds to a preset wavelength 1. The WSS port $d_0$ is a WSS input port corresponding to the group 0, the WSS port $d_1$ is a WSS input port corresponding to the group 1, a WSS port $u_0$ is a WSS output port corresponding to the group 0, and a WSS port $u_1$ is a WSS output port corresponding to the group 1.

For a mapping relationship in the WSS1, refer to Table 1.

**Table 1**

| WSS input port | Wavelength | WSS output port |
| --- | --- | --- |
| WSS port $d_0$ | Preset wavelength 0 | WSS port $u_0$ |
| WSS port $d_0$ | Preset wavelength 1 | WSS port $u_1$ |

(continued)

| WSS input port | Wavelength | WSS output port |
|---|---|---|
| WSS port $d_1$ | Preset wavelength 0 | WSS port $u_0$ |
| WSS port $d_1$ | Preset wavelength 1 | WSS port $u_1$ |

It should be noted that a WSS port corresponds to a group, and specifically corresponds to an NPU of a node in the group. For example, the WSS port $d_0$ corresponds to an NPU (which may be represented as an NPU60) of the node 6 in the group 0, and the WSS port $d_1$ corresponds to an NPU (which may be represented as an NPU70) of the node 7 in the group 1.

Correspondingly, during intra-group data transmission, the NPU in the source group may specifically modulate the data to a carrier with a preset wavelength corresponding to the source group. During inter-group data transmission, the NPU in the source group may specifically modulate the data to a carrier with a preset wavelength corresponding to the target group. With reference to the example in Table 1, when the NPU60 needs to transmit data to an NPU of another node in the group, the NPU60 may modulate the data to a carrier corresponding to the preset wavelength 0. When the NPU60 needs to transmit data to an NPU in the group 1, the NPU60 may modulate the data to a carrier corresponding to the preset wavelength 1.

Intra-group data transmission and/or inter-group data transmission can be implemented through the WSS.

In a possible implementation, after the WSS outputs the carrier carrying the data through the WSS output port, the carrier may be transferred to the MEMS corresponding to the target group. Further, in the target group, the MEMS may transmit the carrier carrying the data to the target node based on a preset optical channel. With reference to the examples in FIG. 23 and FIG. 24, the NPU60 modulates data to the carrier corresponding to the preset wavelength 1. The carrier is input from the WSS port $d_0$ of the WSS1, is output from the WSS port $u_1$, and is then input to the MEMS 1 through the MEMS port 1. The MEMS 1 belongs to the group 1, and the MEMS1 may be configured to construct an optical transmission channel between the WSS1 and a target node in the group 1. For example, if the MEMS1 is configured to connect the WSS1 to the node 3, the carrier carrying data may be transmitted to the node 3 through the optical transmission channel corresponding to the MEMS 1.

In a possible implementation, the WSS port may be an input port, or may be an output port. The MEMS of the target group may transmit a carrier carrying data to a corresponding WSS (which may be referred to as a WSS2) through a WSS port connected to the MEMS port. The WSS2 may configure a downlink channel as a straight-through channel, where the downlink channel may be understood as a channel from an MEMS port to a node port, and the straight-through channel may be understood as that positions of the input port and the output port are corresponding. For example, in FIG. 24, the WSS port $u_0$ to the WSS port $d_0$ is a straight-through channel, and the WSS port $u_1$ to the WSS port $d_1$ is also a straight-through channel. Further, in the foregoing example, for example, the output port of the MEMS1 is connected to a WSS port $u_3$ of the WSS2, the WSS port $u_3$ of the WSS2 is directly connected to a WSS port $d_3$ of the WSS2, and the WSS port $d_3$ is connected to a node port of the node 3. In this case, the MEMS1 transmits a carrier carrying data to the WSS2 through the WSS port $u_3$, and then the WSS2 transmits the carrier carrying data to the node 3 through the WSS port $d_3$.

Further, it may further be set that one group corresponds to two preset wavelengths. A carrier corresponding to one preset wavelength is still transmitted to the MEMS of the corresponding group, and a carrier corresponding to the other preset wavelength may be directly transmitted to a node of the target group. In this way, when the carrier does not need to pass through the MEMS, the carrier may be directly transmitted to the node in the target group.

With reference to the examples in FIG. 23 and FIG. 24, for example, the group 0 corresponds to a preset wavelength 00 and a preset wavelength 01, and the group 1 corresponds to a preset wavelength 10 and a preset wavelength 11. The WSS port $d_0$ is a WSS input port corresponding to the group 0, and the WSS port $d_1$, the WSS port $u_0$, and the WSS port $u_1$ are all WSS output ports corresponding to the group 0. The WSS port $d_1$ is a WSS input port corresponding to the group 1, and the WSS port $d_0$, the WSS port $u_0$, and the WSS port $u_1$ are all WSS output ports corresponding to the group 1. For a mapping relationship in the WSS1, refer to Table 2.

**Table 2**

| WSS input port | Wavelength | WSS output port |
|---|---|---|
| WSS port $d_0$ | Preset wavelength 00 | WSS port $u_0$ |
| WSS port $d_0$ | Preset wavelength 10 | WSS port $u_1$ |
| WSS port $d_0$ | Preset wavelength 11 | WSS port $d_1$ |

(continued)

| WSS input port | Wavelength | WSS output port |
|---|---|---|
| WSS port $d_1$ | Preset wavelength 00 | WSS port $u_0$ |
| WSS port $d_1$ | Preset wavelength 10 | WSS port $u_1$ |
| WSS port $d_1$ | Preset wavelength 01 | WSS port $d_0$ |

For example, the NPU60 of the node 6 modulates data to a carrier corresponding to the preset wavelength 00. The carrier is input by the WSS port $d_0$, output by the WSS port $u_0$, and then input to the MEMS0. The NPU60 of the node 6 modulates the data to a carrier corresponding to the preset wavelength 10. The carrier is input by the WSS port $d_0$, output by the WSS port $u_1$, and then input to the MEMS 1. The NPU0 of the node 6 modulates data to a carrier corresponding to the preset wavelength 11. The carrier is input by the WSS port $d_0$, output by the WSS port $d_1$, and then directly input to the node 7.

In Table 2, one group may correspond to two preset wavelengths. For example, when the total quantity of available wavelengths in the WSS is limited, or it may be understood that, when a total quantity of available wavelengths in the WSS is less than a total quantity of ports of the WSS, a quantity of groups may be 1/2 of the total quantity of available wavelengths. When the total quantity of available wavelengths in the WSS is abundant, or it may be understood that, when the total quantity of available wavelengths in the WSS is greater than the total quantity of ports of the WSS, the quantity of groups may be 1/2 of the total quantity of ports of the WSS. This helps implement that data in any NPU may be sent to an NPU in another node in a same group, or sent to an NPU in another group, and helps avoid unnecessary information transmission.

In addition, an output port corresponding to both a WSS input port and a wavelength is configured for an uplink channel of the WSS, or a mapping relationship between a wavelength and a group is set for the uplink channel of the WSS, and a downlink channel is configured as a straight-through channel. The uplink channel may be understood as a channel from a node port to an MEMS port. Certainly, in another embodiment, the uplink channel of the WSS may be configured as a straight-through channel, and the output port corresponding to both the WSS input port and the wavelength is configured for a downlink channel; or the uplink channel of the WSS and the downlink channel of the WSS may be configured as the output port corresponding to both the WSS input port and the wavelength, to implement inter-group data transmission or intra-group data transmission. This is not limited in this application.

The following still describes, based on two different collective communication manners, alltoall and allreduce, an implementation of data aggregation between a plurality of NPUs in different cases.

1. Alltoall

To implement data aggregation by the plurality of NPUs through the alltoall, an NPU may divide data obtained through model training into a plurality of parts, and a quantity of data parts obtained through division may be the same as a quantity of NPUs in the system. The system includes $S \times W$ nodes, each node includes C NPUs, and each NPU may divide data of the NPU into $S \times W \times C$ parts.

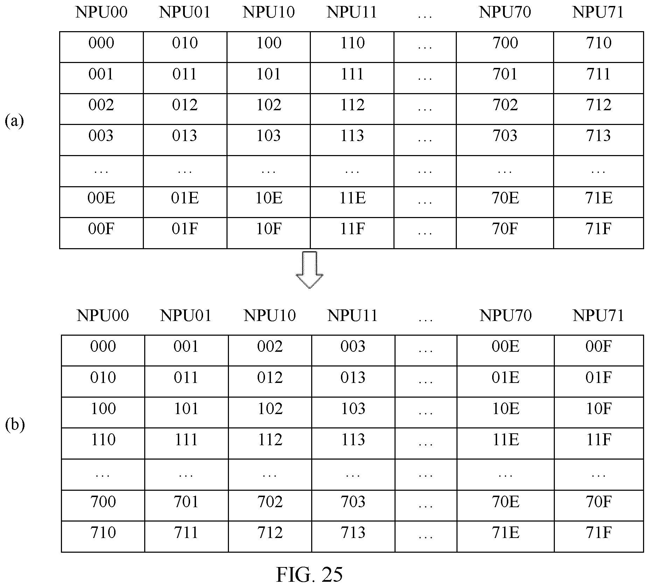

It should be noted that, in this embodiment of this application, a transposition operation is still performed on a data matrix including data in a plurality of NPUs. With reference to the system architecture in FIG. 23, the system includes eight nodes, which may be respectively represented as the node 0 to the node 8. Each node includes two NPUs, where the node 0 includes an NPU00 and an NPU01, the node 1 includes an NPU10 and an NPU11, the node 2 includes an NPU20 and an NPU21, ..., and the node 7 includes an NPU70 and an NPU71. Correspondingly, the system includes 16 NPUs. Each NPU may divide data of the NPU into 16 parts. For a 16×16 data matrix formed by data in the 16 NPUs, refer to (a) in FIG. 25. For a data matrix after alltoall aggregation, refer to (b) in FIG. 25.

For example, 16 parts of data in the NPU00 may be respectively represented as 000, 001, 002, 003, 004, 005, 006, 007, 008, 009, 00A, 00B, 00C, 00D, 00E, and 00F. Specifically, the NPU00 may send 001 to 00F to the NPU01 to the NPU71 (000 is still in the NPU00), and others are similar.

In an alltoall aggregation operation, for an NPU in the source group, when transmitting data to another NPU, the NPU may carry, based on the mapping relationship in the WSS, the data in a preset wavelength corresponding to the target group, to send the data to the target group. For details, refer to the descriptions in the foregoing embodiment.

Further, in the alltoall aggregation operation, the following relationship may exist between the group numbers of the source group and the target group.

A $w_1^{th}$ group in the W groups may be used as the source group, and a $w_2^{th}$ group may be used as the target group. In this case, an offset (that is, $w_2 - w_1$) between the two groups may be determined based on a node number of a node to which each NPU belongs and the total quantity of groups. In a possible manner, $(w_2 - w_1)$ may be represented

as $((s_2\%W)-(s_1\%W))\%W$, where si is a node number of a node to which the NPU in the $w_1^{th}$ group belongs, and $s_2$ is a node number of a node to which the NPU in the $w_2^{th}$ group belongs.

With reference to the example in FIG. 25, for the data 00E of the node 0 in the group 0, the node 0 may determine to transmit the data 00E to the node 7. Correspondingly, the node 7 is located in the group 1, and an offset between the group 1 and the group 0 is offset=$((s_2\%W)-(s_1\%W))\%W=((7\%2)-(0\%2))\%2=1$.

2. Allreduce

In a case of allreduce, the NPU in each node can implement data aggregation based on hierarchical allreduce.

In an implementation, first intra-group data aggregation may be performed, then inter-group data aggregation is performed, and finally second intra-group data aggregation is performed.

The first intra-group data aggregation is specifically data aggregation performed between a plurality of NPUs in the group. For example, each NPU in the group may divide data of the NPU, and a quantity of parts obtained through division is the same as a total quantity of NPUs in the group. Further, an $i^{th}$ NPU in the group may obtain $i^{th}$ data of other NPUs in the group, and obtain an accumulated sum of $i^{th}$ data in all NPUs in the group, to obtain an accumulated result (that is, an intra-group aggregation result) in the group.

The group 0 in FIG. 23 is used as an example for description. The group 0 includes four nodes: the node 0, the node 2, the node 4, and the node 6. The node 0 includes the NPU00 and the NPU01. The node 2 includes the NPU20 and the NPU21. The node 4 includes the NPU40 and the NPU41. The node 6 includes the NPU60 and the NPU61. Each NPU in the group 0 may divide data of the NPU into eight parts. For example, the NPU00 may divide data into 000 to 007, and the NPU01 may divide data into 010 to 017.

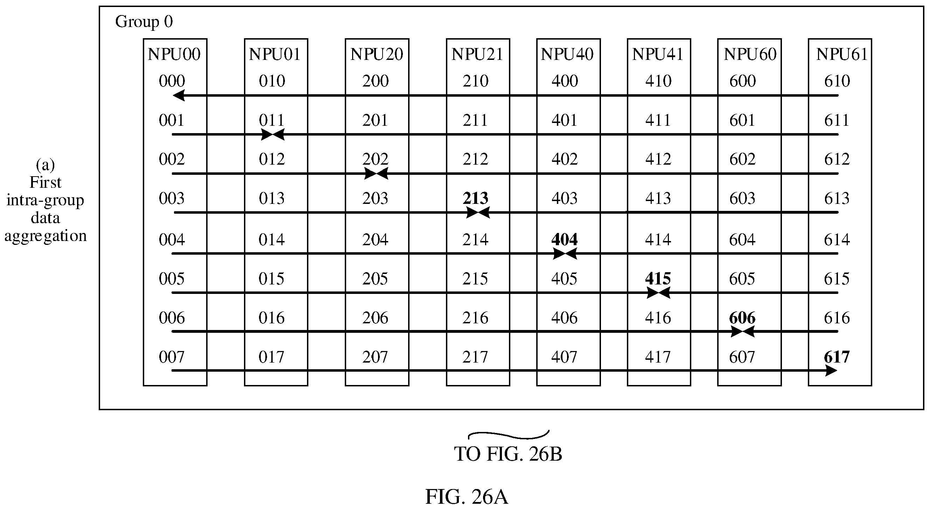

Refer to first intra-group data aggregation shown in FIG. 26A. A $0^{th}$ NPU is an NPU00, and the NPU00 may obtain a $0^{th}$ part of data of another NPU in a group 0. For example, the NPU00 obtains data 010 from an NPU01, obtains data 200 from an NPU20, obtains data 210 from an NPU21, obtains data 400 from an NPU40, obtains data 410 from an NPU41, obtains data 600 from an NPU60, and obtains data 610 from an NPU61, in this way, a sum of the $0^{th}$ data in the NPUs in the group 0 is obtained, and may be represented as 000+010+...+600+610.

Similarly, a first NPU is the NPU01, and the NPU1 may obtain first parts of data of other NPUs in the group 0, and obtain a sum 001+011+...+601+611. A second NPU is the NPU20, and the NPU20 may obtain second parts of data of other NPUs in the group 0, and obtain a sum 002+012+...+602+612.

A third NPU to a seventh NPU are similar to the foregoing. For details, refer to arrow directions in FIG. 26A. Details are not described again.

Based on the foregoing similar steps, in the group 1, the $i^{th}$ NPU may also obtain the $i^{th}$ data of each NPU in the group and obtain a sum. For example, the $0^{th}$ NPU is an NPU10, and the NPU10 may obtain the $0^{th}$ data of each NPU in the group and obtain a sum, which is represented as 100+110+...+700+710. For example, if the first NPU is an NPU11, the NPU11 may obtain $1^{st}$ data of all NPUs in the group and obtain a sum, which is represented as 101+111+...+701+711.

After the first intra-group data aggregation is performed, the inter-group data aggregation may be performed. The inter-group data aggregation is that data of the $i^{th}$ NPU in each group is added through inter-group communication between a plurality of groups, to obtain an aggregation result. The inter-group data aggregation may be implemented by using ring allreduce, recursive halving and doubling, or butterfly.

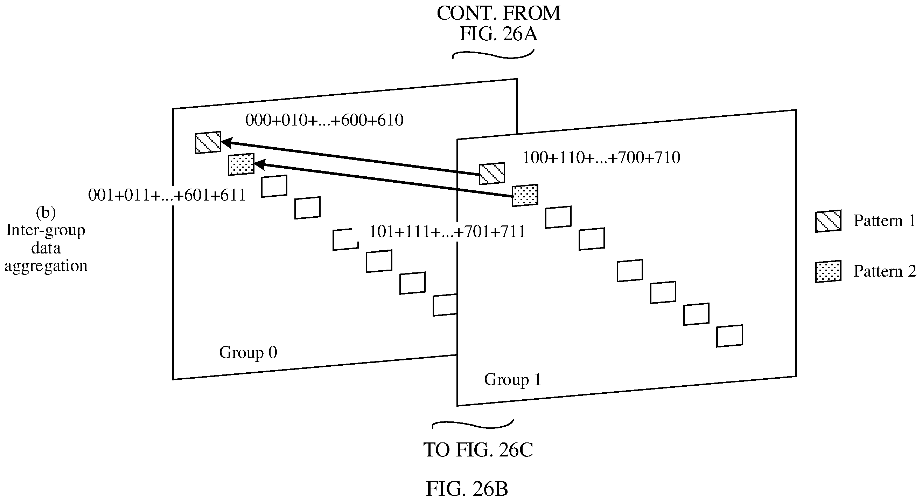

Refer to FIG. 26B. Inter-group data aggregation is shown. A square corresponding to a pattern 1 may represent data obtained by the $0^{th}$ NPU in each group after the steps in FIG. 26A. For example, the $0^{th}$ NPU (that is, the NPU00) in the group 0 obtains data (that is, 100+110+...+700+710) on the $0^{th}$ NPU (that is, the NPU10) in the group 1. In addition, a sum is performed with the local 000+010+...+600+610, to obtain a sum of data on the $0^{th}$ NPU in the two groups, for example, represented as A.

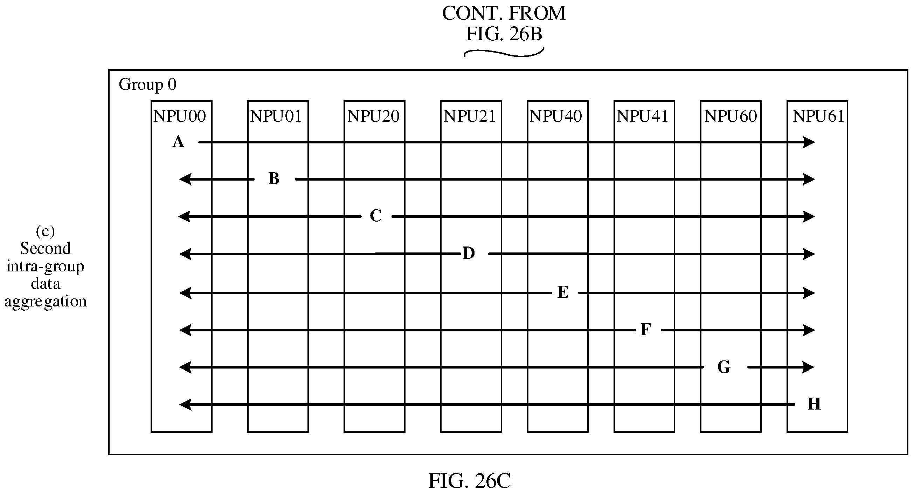

Correspondingly, a square corresponding to a pattern 2 may represent data obtained by the first NPU in each group after the steps in FIG. 26A. The first NPU (that is, the NPU01) in the group 0 may obtain data (that is, 101+111+...+701+711) on the first NPU (that is, the NPU11) in the group 1. In addition, a sum is performed with the local 001+011+...+601+611, to obtain a sum of data on the first NPU in the two groups, for example, represented as B. Others are similar, to obtain a sum of data in NPUs of the groups at corresponding positions. For the obtained data, refer to FIG. 26C.

Subsequently, each NPU may distribute, in the group, obtained data to each NPU in the group. For example, the NPU0 may distribute data A to another NPU in the group 0, and the NPU1 may distribute data B to another NPU in the group 0. For details, refer to second intra-group data aggregation/distribution shown in FIG. 26C.

In another implementation, intra-node data aggregation, first intra-group data aggregation, inter-group data aggregation, and second intra-group data aggregation/distribution may be sequentially performed. The intra-node data aggregation means that data aggregation is performed between a plurality of NPUs in one node. For details, refer to (a) in FIG. 7.

Intra-group data aggregation may also be considered as inter-node data aggregation, that is, data aggregation is performed between a plurality of nodes in the group. For example, one node in the group may divide data into a plurality of pieces, and a quantity of parts obtained through division is the same as a quantity of nodes in the group. Then, the $i^{th}$ node in the group may obtain the $i^{th}$ data in another node in the group, so that the $i^{th}$ node may obtain an accumulation result of the $i^{th}$ data of all nodes in the group, that is, the first intra-group data aggregation.

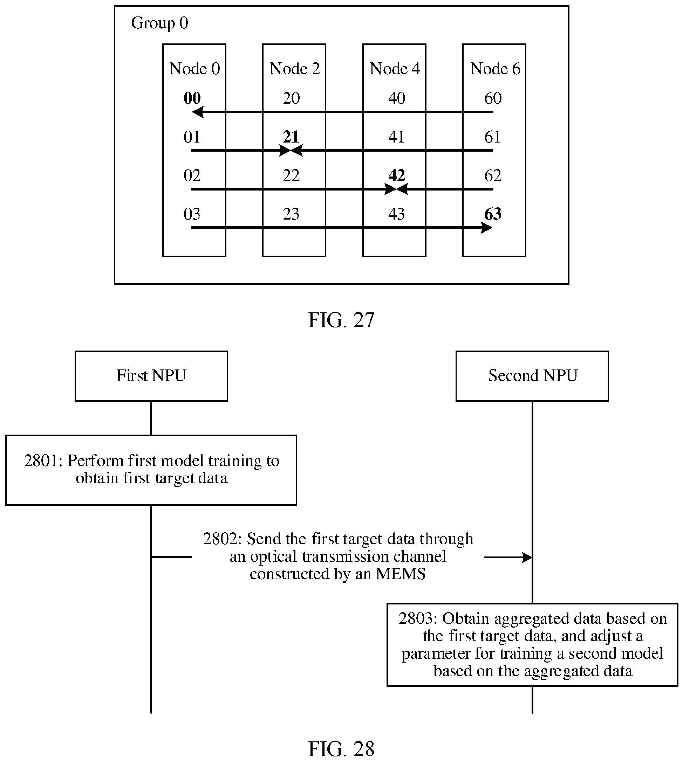

Specifically, refer to an example in FIG. 27. The node 0, the node 2, the node 4, and the node 6 in the group 0 are still used as an example for description in FIG. 27. Any node may divide data into four parts. For example, the node 0 includes data 00, 01, 02, and 03; the node 2 includes data 20, 21, 22, and 23; the node 4 includes data 40, 41, 42, and 43; and the node 6 includes data 60, 61, 62, and 63. The $0^{th}$ node in the group 0 is the node 0, and 20 may be obtained from the node 2, 40 may be obtained from the node 4, and 60 may be obtained from the node 6. Others are similar. For details, refer to FIG. 27.

In this way, the first data aggregation in each group is completed, and then the inter-group data aggregation is performed, that is, data aggregation is performed between a plurality of groups through inter-group communication. For a specific implementation process, refer to FIG. 26B. Then, second data aggregation/distribution in each group is performed. For a specific implementation process, refer to FIG. 26C. Details are not described again.

Based on the foregoing same inventive concept, the following provides a model training method. In the method, a plurality of NPUs may perform joint training to obtain a final model. When two NPUs in a plurality of NPUs perform data aggregation, if the two NPUs belong to different nodes, the two NPUs may communicate based on an optical transmission channel constructed by an MEMS between two nodes to which the two NPUs belong. It may also be understood that, in the plurality of nodes corresponding to the plurality of NPUs, any two nodes may communicate with each other through an optical transmission channel constructed by an MEMS between the two nodes.

Based on whether division exists in joint training, there are two possible manners as follows.

In a possible manner 1, the joint training includes a group (which may be referred to as a first group). The first group includes S nodes, and one node may include C NPUs. In other words, the S×C NPUs may jointly perform model training, to obtain a final model.

In a possible manner 2, the joint training includes W groups, and W is an integer greater than or equal to 2.

One group may include S nodes, and one node includes C NPUs, that is, S×C×WNPUs may jointly perform model training, to obtain a final model. Further, any node may divide the S×W nodes into the W groups based on node numbers of S×W nodes. For a group division manner, refer to descriptions in the embodiment related to FIG. 23.

The joint training may include a plurality of iterations. The following explains one iteration: One NPU may perform model training of the NPU, to obtain intermediate data corresponding to model training of the NPU in a current iteration process. The intermediate data may be one or more of a feature, a gradient, or a model parameter. The NPU may implement data aggregation with another NPU based on a collective communication manner, to obtain aggregated data of this iteration. The aggregated data may be used for each NPU to adjust a parameter in a model of each NPU in a next iteration.

The following uses a first NPU and a second NPU as an example for description. The first NPU is located in a first node, the second NPU is located in a second node, and the first node and the second node are different nodes in the foregoing joint training.

Refer to FIG. 28. A process of a model training method is explained as follows.

Step 2801: A first NPU performs first model training to obtain first target data.

In a possible implementation, the first NPU runs first model training. In one iteration, the first NPU runs the first model training to obtain first intermediate data, and then determines the first target data based on the first intermediate data and the collective communication manner. The collective communication manner may specifically include one or more of alltoall and allreduce. The first target data may be the first intermediate data, or a part of the first intermediate data.

The first target data may be sent by the first NPU to a second NPU, to be used for the second NPU to update a parameter in second model training in the second NPU.

When the joint training is performed to determine whether to perform division, a communication manner between the first NPU and the second NPU in different collective communication manners is different. The following describes two possible manners.

In a possible manner 1, the joint training includes one group.

In a case of alltoall, the first NPU may divide the first intermediate data into S×C parts of data, and then use data that is in the S×C parts of data and that is corresponding to the second NPU as the first target data. With reference to the example in FIG. 19, for example, the first NPU is the NPU00, and the second NPU is the NPU11. The NPU00 divides the first intermediate data into 000, 001, 002, 003, 004, 005, 006 and 007, and then determines that the data 003 is the first target data.

For example, the first node may be an $s_1^{th}$ node in the S nodes, and the second node is an $s_2^{th}$ node in the S nodes, where $s_1$ and $s_2$ are set to every integer in [0, S], and si is less than $s_2$. The second NPU is C NPUs included in the second node, and the first target data is the $(s_2 \times C)^{th}$ to $(s_2 \times C+C-1)^{th}$ data in the S×C pieces of data obtained by dividing the first intermediate data by the first NPU. Herein, it may also be understood that the first NPU exchanges data with the second NPU. For example, the first NPU is a $c^{th}$ NPU in the first node. When the first NPU sends, to the C second NPUs, $(s_2 \times C)^{th}$ to $(s_2 \times C+C-1)^{th}$ data in the $S \times C$ pieces of data obtained through division, the first NPU may further separately obtain data from the C second NPUs. Specifically, each second NPU also divides second intermediate data of the second NPU into $S \times C$ parts, and the first NPU may obtain the $(s_1 \times C+C)^{th}$ data of each second NPU from the C second NPUs.

In an allreduce case, the first NPU is the $i^{th}$ NPU in the first node, and the second NPU is the $i^{th}$ NPU in the second node, that is, the two NPUs are located at corresponding positions in different nodes. The first NPU and the second NPU perform inter-node data aggregation (or the first NPU and the second NPU perform intra-group data aggregation corresponding to the first group).

In an example, the first NPU divides the first intermediate data to obtain the C parts of data; the first NPU obtains the $i^{th}$ data of other (C-1) NPUs in the first node through the intra-node channel of the first node; and then the first NPU performs summation on the $i^{th}$ data in the C pieces of data and the $i^{th}$ data of the other (C-1) NPUs in the first node, to obtain the first target data. For example, in FIG. 7, the first NPU is the NPUO of the node 0, and the second NPU is the NPU0 of the node 1. In this case, the NPU0 of the node 0 may obtain a sum of the $0^{th}$ data in all NPUs of the node 0 during the first intra-node data aggregation, that is, $a_{00}+b_{00}+c_{00}+d_{00}$, as the first target data, and the first target data may be sent by the NPU0 of the node 0 to the NPU0 of the node 1.

In a possible manner 2, the joint training includes W groups.

It should be noted in advance that, the first NPU (or the first node) is used as a data sender, and a group to which the first NPU belongs may be referred to as a source group; and the second NPU (or the second node) is used as a data receiver, and a group to which the second NPU belongs may be referred to as a target group. The source group and the target group may be a same group or two different groups.

In a case of alltoall, the first NPU may divide the first intermediate data into $S \times C \times W$ parts of data, and then use data that is in the $S \times C \times W$ parts of data and that is corresponding to the second NPU as the first target data. With reference to the example in FIG. 25, for example, the first NPU is the NPU00, and the second NPU is the NPU11. The NPU00 divides the first intermediate data into 000 to 00F, where the data 003 corresponds to the NPU11, and therefore, the NPU00 may determine that the data 003 is the first target data.

The $S \times W$ nodes may be divided into the W groups based on node numbers. It may be understood that the first node to which the first NPU belongs may be the $s_1^{th}$ node in the $S \times W$ nodes, and the second node is the $s_2^{th}$ node in the $S \times W$ nodes. Similarly, data may also be transmitted between the first NPU and the second NPU. Details are similar to the foregoing possible manner 1. A difference lies in that a channel for transmitting data by the first NPU is different from a channel for transmitting data by the second NPU. The former is for intra-group data transmission. The first NPU may send the first target data to the second NPU through an inter-node channel (that is, the optical transmission channel constructed by the MEMS), or through an inter-node channel and an intra-node channel. The latter relates to inter-group data transmission. The first NPU needs to send the first target data to the second NPU in the target group not only through the inter-node channel, or through the inter-node channel and the intra-node channel, but also through the optical transmission channel constructed by a WSS.

For example, the source group is a $w_1^{th}$ group in the W groups, the target group is a $w_2^{th}$ group in the W groups, wi may be set to every integer in [0, W-1], and an offset between $w_2$ and $w_1$ may be represented as off-set=$w_2-w_1=((s_2 \% W)-(s_1 \% W)) \% W$.

In a case of allreduce, the first NPU is the $i^{th}$ NPU in the source group, and the second NPU is the $i^{th}$ NPU in the target group, that is, the two NPUs are located at corresponding positions in different groups.

When the source group and the target group are different groups, the first NPU and the second NPU need to perform inter-group data aggregation. There are at least the following two examples.

In an example, after performing the first model training to obtain the first intermediate data, the first NPU may first divide the first intermediate data to obtain the C parts of data. The first NPU obtains the $i^{th}$ data of the other (C-1) NPUs in the first node through the intra-node channel of the first node. Then, after the first NPU performs summation on the $i^{th}$ data in the C pieces of data and the $i^{th}$ data of the other (C-1) NPUs in the first node, to obtain an aggregation result in the first node in the source group. Similarly, the second NPU may obtain the aggregation result in the second node in the target group in a similar manner. Then, the first NPU and the second NPU perform inter-group data aggregation. Specifically, the first NPU may send the intra-node aggregation result in the first node to the second NPU, where the intra-node aggregation result in the first node is the first target data. Correspondingly, the second NPU may perform inter-group data aggregation based on the intra-node aggregation result in the first node and the intra-node aggregation result in the second node.

With reference to the example in FIG. 27, for example, the first node is the node 0, and the first NPU is the NPU00. The NPU00 may obtain data in another NPU in the node 0 to obtain an aggregation result (that is, the first target data) of the node 0. Similarly, for example, the second node is the node 2, and the second NPU is the NPU20. The NPU20 may also obtain an aggregation result of the node 2. Therefore, the NPU00 may send the aggregation result of the node 0 to the NPU20. Correspondingly, the NPU20 may perform inter-group aggregation based on the aggregation result of the node 0 and the aggregation result of the node 2.

In still another example, after performing the first model training to obtain the first intermediate data, the first NPU may divide the first intermediate data to obtain $C \times S$ parts of data, that is, a quantity of parts obtained through division is the same as a quantity of NPUs in a group. The first NPU first performs intra-group data aggregation with another NPU in the source group in which the first NPU is located. For an implementation, refer to a related embodiment in the foregoing possible manner 1. Then, the first NPU may use an aggregation result corresponding to the intra-group data aggregation as the first target data.

For example, in FIG. 26B, the first NPU is the 0th NPU (namely, the NPU00) in the group 0, and the second NPU is the 0th NPU (namely, the NPU10) in the group 1. The NPU00 first performs the first intra-group data aggregation in FIG. 26A, so that the NPU00 obtains 000+010+...+600+610. The NPU00 then performs inter-group data aggregation in FIG. 26B. The NPU00 sends 000+010+...+600+610 as the first target data to the NPU10.

When the source group and the target group belong to a same group, the first NPU and the second NPU still perform inter-node data aggregation (or the first NPU and the second NPU perform intra-group data aggregation corresponding to a current group). Refer to a related embodiment in the foregoing possible manner 1.

Step 2802: The first NPU sends the first target data to the second NPU through the optical transmission channel constructed by the MEMS.

In a case that the joint training includes one group (that is, the first group),

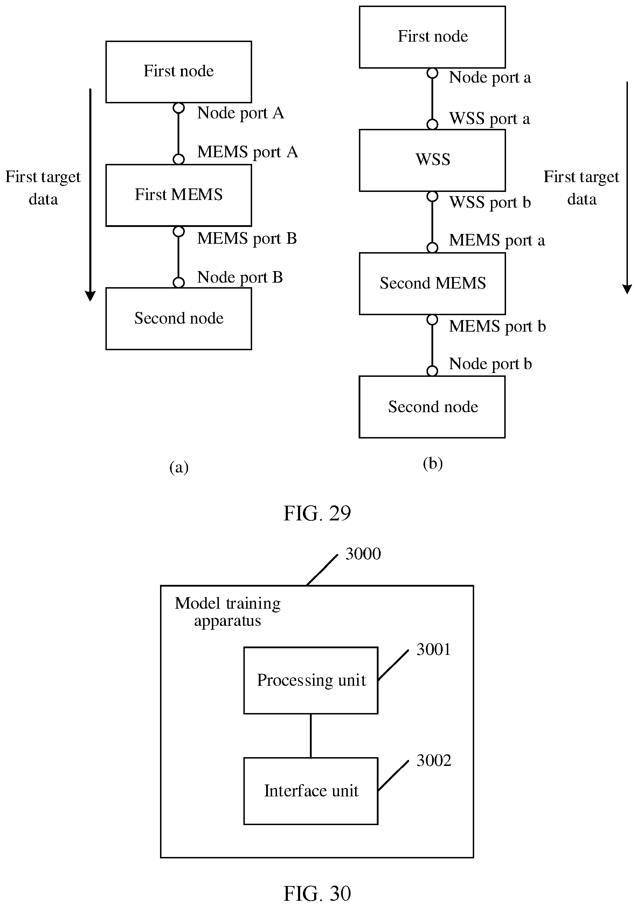

an MEMS that is located between the first node and the second node and that is configured to connect the first node and the second node may be referred to as a first MEMS. Refer to an example in (a) in FIG. 29. A node port (which may be referred to as a node port A) of the first node is connected to an MEMS port A of the first MEMS, and a node port (which may be referred to as a node port B) of the second node is connected to an MEMS port B of the first MEMS. In this way, there is a connection channel between the first node and the second node, and the first node and the second node may communicate with each other through the connection channel.

For that the first NPU sends the first target data to the second NPU, refer to the following three examples.

Example 1: The node port A is a port in the first NPU, and the node port B is a port in the second NPU. When the first NPU sends the first target data to the second NPU, specifically, the first NPU sends the first target data to the second NPU sequentially through the node port A, the MEMS port A, the MEMS port B, and the node port B.

With reference to the example in FIG. 21, for example, the port (0, 0) is connected to the port (1, 0) through the MEMS. The port (0, 0) belongs to the NPU00 in the node 0, and the port (1, 0) belongs to the NPU10 in the node 1. Further, the first NPU is the NPU10, the second NPU is the NPU00, and the first target data is the data B0. When the NPU10 sends the data B0 to the NPU00, specifically, the NPU10 may send the data B0 to the NPU00 sequentially through the port (1, 0), the MEMS port A, the MEMS port B, and the port (0, 0).

Example 2: The node port A is a port in another NPU (which may be referred to as a third NPU) other than the first NPU on the first node, and the node port B is a port in another NPU (which may be referred to as a fourth NPU) other than the second NPU on the second node. In this case, when the first NPU sends the first target data to the second NPU, specifically, the first NPU first sends the first target data to the third NPU through an internal channel of the first node, then, the third NPU sends the first target data to the fourth NPU sequentially through the node port A, the MEMS port A, the MEMS port B, and the node port B. The fourth NPU sends the first target data to the second NPU through the internal channel of the second node.

With reference to the example in FIG. 21, for example, the first NPU is the NPU01, the second NPU is the NPU11, and the first target data is data A1+D1. The port (0, 3) is connected to the port (1, 3) through the MEMS. The port (0, 3) belongs to the NPU03 in the node 0, and the port (1, 3) belongs to the NPU13 in the node 1. In other words, the NPU03 is the third NPU, and the NPU04 is a fourth NPU. When the NPU01 sends the data A1+D1 to the NPU11, specifically, the NPU01 may first send the data A1+D1 to the NPU03, then the NPU03 sends the data to the NPU13 sequentially through the port (0, 3), the MEMS port A, the MEMS port B, and the port (1, 3), and then the NPU13 sends the data A1+D1 to the NPU11.

Example 3: The node port A is a port in the third NPU in the first node, and the node port B is a port in the second NPU in the second node; or the node port A is a port in the first NPU in the first node, and the node port B is a port in a fourth NPU in the second node. For specific implementation, refer to descriptions in Example 1 and/or Example 2.

In a case that the joint training includes W groups:

the MEMS that is located between the first node and the second node and that is configured to connect the first node to the second node may be referred to as a second MEMS, and both the second MEMS and the second node belong to the target group.

As shown in an example in (b) in FIG. 29, the first node includes a node port a, the WSS includes a WSS port a and a WSS port b, the second MEMS includes an MEMS port a and an MEMS port b, and the second node includes a node port b.

The node port a is connected to the WSS port a, the WSS port b is connected to the MEMS port a, and the MEMS port b is connected to the node port b. In this way, there is a connection channel between the first node and the second node, and the first node and the second node may communicate with each other through the connection channel.

That the first NPU sends the first target data to the second NPU may be specifically that the first NPU sends the first target data to the second NPU sequentially through the optical transmission channel constructed by the WSS and the optical transmission channel constructed by the second MEMS.

The node port a may be a port in the first NPU, and the first NPU may send the first target data to the WSS through the port in the first NPU; or the node port a is not a port in the first NPU, and the first NPU may first send, through the intra-node channel of the first node, the first target data to an NPU corresponding to the node port a, and then the NPU sends the first target data to the WSS through the port in the first NPU.

The node port b may be a port in the second NPU, and the second NPU may receive the first target data from the second MEMS through the node port b. Alternatively, the node port b is not a port in the second NPU, and an NPU corresponding to the node port b in the second node may receive the first target data from the second MEMS, and then the second NPU may receive, through an intra-node channel of the second node, the first target data from the NPU corresponding to the node port b.

Further, in the WSS, the WSS port a may further correspond to another WSS port. For details, refer to descriptions in related embodiments in Table 1 and Table 2. When sending the first target data to the WSS, the first NPU may modulate the first target data to a carrier of a preset wavelength (which may be referred to as a target preset wavelength) corresponding to the target group. In this way, the WSS may send, to the target group based on the mapping relationship between the target preset wavelength and the target group, the carrier carrying the first target data.

It may also be understood that the WSS includes a mapping relationship between the WSS input port corresponding to the source group, the target preset wavelength, and the WSS output port corresponding to the target group. After receiving, through the WSS input port corresponding to the source group, the carrier carrying the first target data and sent by the first NPU in the source group, the WSS may send the carrier carrying the first target data to the target group through the WSS output port corresponding to the target group and based on the mapping relationship.

With reference to the examples in FIG. 23 and FIG. 29, for example, both the first NPU and the second NPU are NPUs in the group 0, and the group 0 corresponds to the preset wavelength 0. The first NPU may modulate the first target data to a carrier corresponding to the preset wavelength 0, and input the first target data to the WSS through the WSS port a. The WSS sends the carrier carrying the first target data to the second MEMS through the WSS port b corresponding to both the preset wavelength 0 and the WSS port a. The second MEMS also belongs to the group 0, and the second MEMS sends the received carrier carrying the first target data to the second NPU.

For another example, the first NPU belongs to the group 0, and the second NPU belongs to the group 1. The group 1 corresponds to the preset wavelength 1. The first NPU may modulate the first target data to a carrier corresponding to the preset wavelength 1, and input the first target data to the WSS through the WSS port a. The WSS sends the carrier carrying the first target data to the second MEMS through the WSS port b corresponding to both the preset wavelength 1 and the WSS port a. The second MEMS also belongs to the group 1, and the second MEMS sends the received carrier carrying the first target data to the second NPU.

It should further be noted that the foregoing describes how the WSS implements inter-group communication through only two groups as an example. When there are a plurality of groups, the first NPU may send different data to NPUs in different groups by changing a carrier wavelength. For example, the first NPU belongs to the group 0, and the first NPU needs to send five parts of target data to NPUs corresponding to five target groups, where the five target groups are the group 1, the group 2, the group 3, the group 4, and the group 5. The five target groups respectively correspond to the preset wavelength 1, the preset wavelength 2, the preset wavelength 3, the preset wavelength 4, and the preset wavelength 5. When sending the target data corresponding to the group 1 to the group 1, the first NPU may carry the target data in the carrier corresponding to the preset wavelength 1, so that the WSS may send the target data to the group 1. When sending the target data corresponding to the group 2 to the group 2, the first NPU may carry the target data in the carrier corresponding to the preset wavelength 2, so that the WSS may send the target data to the group 2. In this way, the first NPU may send different target data to different target groups by adjusting the carrier wavelength.

Step 2803: The second NPU obtains aggregated data based on the first target data, and adjusts, based on the aggregated data, a parameter for training the second model.

In a possible manner, the second NPU performs the second model training to obtain the second intermediate data, and then determines the second target data based on the second intermediate data and the collective communication manner. The second target data may be the second intermediate data, or may be included in the second intermediate data. An implementation in which the second NPU determines the second target data is similar to an implementation in which the first NPU determines the first target data in step 2801. The second NPU may further send the second target data to the first NPU. Correspondingly, the first NPU may also receive the second target data from the second NPU, determine the aggregated data based on the second target data, and adjust the parameter for training the first model based on the aggregated data.

In a possible manner, the second NPU may not only receive the first target data from the first NPU, but also receive the target data from the another NPU, and determine the aggregated data based on one or more of the target data of the another NPU, the first target data, and the second intermediate data. Then, the second NPU adjusts, based on the aggregated data, the parameter for training the second model.

In addition, the first NPU and the second NPU may alternatively belong to a same node. In this case, the first NPU and the second NPU may perform intra-node data aggregation. Refer to the first intra-node data aggregation shown in FIG. 7. Specifically, the first NPU divides the first intermediate data into C parts of data, and sends, to the second NPU, first target data that is in the C parts of data and that is corresponding to the second NPU. For example, the first NPU is the NPU0, and the second NPU is the NPU1. The NPU0 may divide the data into $a_{00}$ to $a_{03}$, where the NPU1 corresponds to the data $a_{01}$, and the first target data is the data $a_{01}$. The first target data may be sent by the NPU0 to the NPU1.

As described above, the model is jointly trained by the plurality of NPUs, which helps expand a training scale of model training and can quickly aggregate intermediate data trained by each NPU model. In this way, the plurality of NPUs jointly train a model more efficiently.

It should be added that for implementations that are not described in detail in the model training method in this application, refer to descriptions in the system embodiments related to FIG. 14 to FIG. 27. In this application, an NPU is used as an example for description. The foregoing embodiment may be replaced with a CPU, a GPU, or another component having a processing function, or the NPU in the foregoing embodiment may be replaced with a processor.

Based on a same inventive concept as the method embodiment, an embodiment of this application further provides a model training apparatus. The model training apparatus may be deployed on a node, and is configured to perform the method performed by the processor in the method embodiment shown in FIG. 28.

For a schematic diagram of a structure of the model training apparatus 3000, refer to FIG. 30. In a possible implementation, the model training apparatus 3000 includes a processing unit 3001 and an interface unit 3002. The processing unit 3001 is configured to perform model training in the apparatus to obtain first target data. The interface unit 3002 is configured to send first target data to a second processor of a second node through an optical transmission channel constructed by an MEMS. The MEMS is located between the first node to which the apparatus belongs and the second node, and the first target data is used for the second processor to adjust a parameter for model training in the second processor.

In a possible implementation, the interface unit 3002 is specifically configured to send the first target data to the second processor through the optical transmission channel constructed by the MEMS and an intra-node channel. The intra-node channel includes a channel between the apparatus 3000 and the MEMS in the first node, and/or a channel between the second processor and the MEMS in the second node.

In a possible implementation, the interface unit 3002 is specifically configured to sequentially send the first target data to the second processor through an optical transmission channel constructed by a wavelength selective switch WSS and the optical transmission channel established by the MEMS. The second node and the MEMS belong to a same group, and the WSS is located between the MEMS and the first node.

In a possible implementation, the WSS includes a mapping relationship between a carrier wavelength and a group, and in one mapping relationship, the carrier wavelength is a preset wavelength corresponding to the group. The interface unit 3002 is specifically configured to: modulate the first target data into the carrier, where a wavelength of the carrier is a preset wavelength corresponding to the group to which the second node belongs; and send the carrier carrying the first target data to the WSS, so that the WSS sends the carrier carrying the first target data to the MEMS.

In a possible implementation, the processing unit 3001 is specifically configured to: perform model training in the apparatus 3000 to obtain intermediate data of the apparatus 3000; and determine first target data based on a collective communication manner and the intermediate data of the apparatus 3000. The first target data is all or a part of the intermediate data of the apparatus 3000. Training data and a training model in the apparatus 3000 are different from those in the second processor, and the collective communication manner is alltoall. Alternatively, training data in the apparatus 3000 is different from that in the second processor, and the collective communication manner is allreduce.

In a possible implementation, the processing unit 3001 is specifically configured to divide the intermediate data of the apparatus 3000 based on alltoall and a total quantity of processors corresponding to alltoall. The processor corresponding to alltoall includes the apparatus 3000 and a second processor. A quantity of data parts after division is equal to the total quantity of processors, and the data after division includes first target data corresponding to the second processor.

In a possible implementation, alltoall corresponds to S nodes, the first node is an $s_1^{th}$ node in the S nodes, the second node is an $s_2^{th}$ node in the S nodes, $s_1$ and $s_2$ are set to every integer in [0, S], and si is less than $s_2$. The second processor is C processors included in the second node. The first target data is $(s_2 \times C)^{th}$ to $(s_2 \times C + C - 1)^{th}$ pieces of data in $S \times C$ pieces of data after the division.

In a possible implementation, the alltoall corresponds to W groups, the first node is an $s_1^{th}$ node of a $w_1^{th}$ group in the W groups, and the second node is an $s_2^{th}$ node of a $w_2^{th}$ group in the W groups, wi is set to every integer in [0,

W-1], and $w_2=w_1+offset$, where $offset=((s_2\%W)-(si\%W))\%W$.

In a possible implementation, the processing unit 3001 is specifically configured to: divide the intermediate data of the apparatus 3000 based on the allreduce and the total quantity C of processors in the first node, to obtain the C pieces of data; obtain the $i^{th}$ data of other (C-1) processors in the first node through an intra-node channel of the first node; and perform summation on the $i^{th}$ data in the C pieces of data and the $i^{th}$ data of the other (C-1) processors in the first node, to obtain the first target data. The apparatus 3000 is an $i^{th}$ processor in the first node, and the second processor is an $i^{th}$ processor in the second node.

In a possible implementation, allreduce corresponds to W groups, one group includes S nodes, and one node includes C processors. The apparatus 3000 is an $i^{th}$ processor in a group to which the apparatus 3000 belongs. The second processor is an $i^{th}$ processor in the group to which the apparatus 3000 belongs. The processing unit 3001 is specifically configured to divide the intermediate data of the apparatus 3000 based on allreduce and the total quantity $S \times C$ of processors in the group, to obtain $S \times C$ pieces of data; obtain through the intra-node channel of the first node and/or optical transmission channels that are between the first node and other (S-1) nodes in the group to which the first processor belongs and that are constructed by the MEMS, $i^{th}$ data of other ($S \times C$-1) processors in the group to which the second processor belongs; and perform summation on the $i^{th}$ data in the $S \times C$ pieces of data and the $i^{th}$ data of the other ($S \times C$-1) processors in the group to which the second processor belongs, to obtain the first target data.

In a possible implementation, the processing unit 3001 is further configured to: obtain second target data, where the second target data is data that is obtained by the second processor by performing model training in the second processor and that is to be transmitted to the apparatus 3000; and adjust a parameter for model training in the apparatus 3000 based on the second target data.

In a possible implementation, the processing unit 3001 is further configured to: before performing the model training in the apparatus to obtain the first target data, divide a plurality of nodes into W groups based on a total quantity of the plurality of nodes for joint training a model, a total quantity of ports of the WSS, and a total quantity of available wavelengths in the WSS. When the total quantity of available wavelengths in the WSS is less than the total quantity of the ports of the WSS, and one group in the W groups corresponds to two preset wavelengths, W is equal to 1/2 of the total quantity of available wavelengths in the WSS.

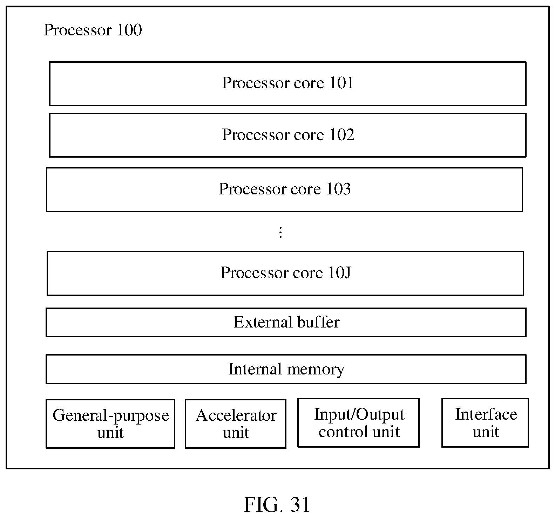

Based on the foregoing content and the same concept, FIG. 31 is an example of a schematic diagram of a structure of a processor according to an embodiment of this application. As shown in FIG. 31, the processor 100 may include at least one processor core, for example, a processor core 101, a processor core 102, a processor core 103, ..., and a processor core 10J, where J is a positive integer. In addition, the apparatus may further include a non-core component, for example, an external buffer, an internal memory, a general-purpose unit (including a counter, a decoder, a signal generator, and the like), an accelerator unit, an input/output control unit, and an interface unit. The at least one processor core is used as a core component of the processor 100, and is configured to implement a processing function of the processor 100. The non-core component and each processor core may be connected by a bus, to implement a data transmission operation.

It should be understood that the processor 100 may be an integrated circuit chip and has a signal processing capability. For example, the processor 100 may be a general purpose processor, may be a field programmable gate array (field programmable gate array, FPGA), may be an application specific integrated chip (application specific integrated circuit, ASIC), may be a system on chip (system on chip, SoC), may be a network processor (network processor, NP), may be a digital signal processing circuit (digital signal processor, DSP), may be a micro controller (micro controller unit, MCU), may be a programmable controller (programmable logic device, PLD), or another programmable logic device, a discrete gate or transistor logic device, a discrete hardware component, or another integrated chip.

The processor 100 may include a central processing unit (central processor unit, CPU), a neural-network processing unit (neural-network processing unit, NPU), and a graphics processing unit (graphics processing unit, GPU), and may further include an application processor (application processor, AP), a modem processor, an image signal processor (image signal processor, ISP), a video codec, a digital signal processor (digital signal processor, DSP), and/or a baseband processor. These components may be deployed on different chips in a distributed manner, or may be integrated into one chip. This is not specifically limited. The processor 100 may perform the method in the first processor in the foregoing method embodiments, or is configured to perform the method in any processor in the foregoing system embodiments.

It may be understood that the memory (for example, the external buffer and the internal memory) in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the method described in this specification is intended to include, but is not limited to, these memories and any other memory of a proper type.

According to the method provided in embodiments of this application, this application further provides a computer program product. The computer program product includes computer program code. When the computer program code is run on a computer, the computer is enabled to perform the method in any one of the embodiments shown in FIG. 28.

According to the method provided in embodiments of this application, this application further provides a computer-readable storage medium. The computer-readable medium stores program code. When the program code is run on a computer, the computer is enabled to perform the method in any one of the embodiments shown in FIG. 28.

According to the method provided in embodiments of this application, this application further provides a computing device. The computing device includes a processor, the processor is connected to a memory, and the processor is configured to execute a computer program stored in the memory, so that the computing device performs the method in any one of the method embodiments shown in FIG. 28.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A model training system, comprising:

    a first group comprising a micro-electro-mechanical system MEMS and $S\times C$ processors, wherein S is a quantity of nodes in the first group, C is a quantity of processors in a node, and both S and C are positive integers;
    the MEMS is configured to construct an optical transmission channel between any two nodes in the S nodes; and
    the $S\times C$ processors are configured to jointly train a model, wherein at least two of the $S\times C$ processors transmit target data through the optical transmission channel, and a processor that receives the target data is configured to adjust a parameter for model training in the processor based on the target data.

2.  The system according to claim 1, wherein the first group comprises a first node and a second node, the first node comprises a first processor, and the second node comprises a second processor, wherein

    the first processor is configured to perform model training in the first processor to obtain intermediate data of the first processor, and obtain first target data based on the intermediate data of the first processor, wherein the first target data is all or a part of the intermediate data of the first processor;
    the first processor is further configured to send the first target data to the second processor through an optical transmission channel constructed by a first MEMS and an intra-node channel; and
    the second processor is configured to adjust a parameter for model training in the second processor based on the first target data, wherein
    the first MEMS is located between the first node and the second node; and
    the intra-node channel comprises a channel that is in the first node and that is between the first processor and the first MEMS, and/or a channel that is in the second node and that is between the second processor and the first MEMS.

3.  The system according to claim 1, further comprising:

    a wavelength selective switch WSS and (W-1) extended groups, wherein W is an integer greater than or equal to 2, and the first group and the (W-1) extended groups form W groups; and
    the WSS is connected to each of the W groups.

4.  The system according to claim 3, wherein

    the WSS comprises W first WSS ports and W second WSS ports;
    the W first WSS ports are respectively connected to W node ports, wherein the W node ports respectively belong to the W groups, and positions of the W node ports in respective groups are corresponding; and
    the W node ports correspond to respective MEMS ports in the respective groups, and the MEMS ports corresponding to the W node ports are respectively connected to the W second WSS ports.

5.  The system according to claim 3 or 4, wherein the first group comprises a first node, and the first node comprises a first processor, wherein

    the first processor is configured to perform model training of the first processor to obtain intermediate data of the first processor, and obtain first target data based on the intermediate data of the first processor, wherein the first target data is all or a part of the intermediate data of the first processor;
    the first processor is further configured to send the first target data to a second processor sequentially through optical transmission channels respectively constructed by the WSS and a second MEMS; and
    the second processor is configured to adjust a parameter for model training in the second processor based on the first target data, wherein
    the second processor is located in a second node, and the second node is another node other than the first node in the first group, or is a node in any one of the (W-1) extended groups; and

the WSS and the second MEMS are sequentially located between the first node and the second node, and the second MEMS and the second node belong to a same group.

6. The system according to claim 5, wherein the first processor is specifically configured to modulate the first target data to a carrier, wherein a wavelength of the carrier is a preset wavelength corresponding to the group to which the second node belongs; and

the WSS is configured to send the carrier carrying the first target data to the second MEMS based on a mapping relationship between the wavelength of the carrier and the group to which the second node belongs.

7. The system according to any one of claims 3 to 6, wherein when each of the W groups corresponds to two preset wavelengths, W is equal to 1/2 of a total quantity of available wavelengths in the WSS.

8. The system according to any one of claims 1 to 7, wherein both training data and training models in any two of the S×C processors are different, and a collective communication manner between the S×C processors is alltoall; or training data in any two of the S×C processors is different, and a collective communication manner between the S×C processors is allreduce.

9. The system according to any one of claims 1 to 8, wherein the target data comprises one or more of a gradient, a feature, or a model parameter for model iteration.

10. A model training method, comprising:

performing, by a first processor of a first node, model training in the first processor, to obtain first target data; and sending, by the first processor, the first target data to a second processor of a second node through an optical transmission channel constructed by a micro-electro-mechanical system MEMS, wherein the MEMS is located between the first node and the second node, and the first target data is for the second processor to adjust a parameter for model training in the second processor.

11. The method according to claim 10, wherein the sending, by the first processor, the first target data to a second processor of a second node through an optical transmission channel constructed by a MEMS comprises:

sending, by the first processor, the first target data to the second processor through the optical transmission channel constructed by the MEMS and an intra-node channel, wherein

the intra-node channel comprises a channel that is in the first node and that is between the first processor and the MEMS, and/or a channel that is in the second node and that is between the second processor and the MEMS.

12. The method according to claim 10 or 11, wherein the sending, by the first processor, the first target data to a second processor of a second node through an optical transmission channel constructed by a MEMS comprises:

sending, by the first processor, the first target data to the second processor sequentially through an optical transmission channel constructed by a wavelength selective switch WSS and the optical transmission channel constructed by the MEMS, wherein

the second node and the MEMS belong to a same group; and

the WSS is located between the MEMS and the first node.

13. The method according to claim 12, wherein the WSS comprises a mapping relationship between a wavelength of a carrier and a group, and in one mapping relationship, a wavelength of a carrier is a preset wavelength of a corresponding group; and

the sending, by the first processor, the first target data to the second processor sequentially through an optical transmission channel constructed by a WSS and the optical transmission channel constructed by the MEMS comprises:

modulating, by the first processor, the first target data to a carrier, wherein a wavelength of the carrier is a preset wavelength corresponding to a group to which the second node belongs; and

sending, by the first processor, the carrier carrying the first target data to the WSS, to enable the WSS to send the carrier carrying the first target data to the MEMS.

**14.** The method according to any one of claims 10 to 13, wherein the performing, by a first processor of a first node, model training in the first processor, to obtain first target data comprises:

performing, by the first processor, model training in the first processor to obtain intermediate data of the first processor; and

determining, by the first processor, the first target data based on a collective communication manner and intermediate data of the first processor, wherein the first target data is all or a part of the intermediate data of the first processor, wherein

both training data and training models in the first processor and the second processor are different, and the collective communication manner is alltoall; or

training data in the first processor and the second processor is different, and the collective communication manner is allreduce.

**15.** The method according to claim 14, wherein the determining, by the first processor, the first target data based on a collective communication manner and intermediate data of the first processor comprises:

dividing, by the first processor, the intermediate data of the first processor based on the alltoall and a total quantity of processors corresponding to the alltoall, wherein

the processors corresponding to the alltoall comprise the first processor and the second processor; and

a quantity of data parts after division is equal to the total quantity of processors, and the data after division comprises the first target data corresponding to the second processor.

**16.** The method according to claim 15, wherein the alltoall corresponds to S nodes, the first node is an $s_1^{th}$ node in the S nodes, and the second node is an $s_2^{th}$ node in the S nodes, wherein $s_1$ and $s_2$ are set to every integer in [0, S], and si is less than $s_2$; and

the second processor is C processors comprised in the second node, and the first target data is $(s_2 \times C)^{th}$ data to $(s_2 \times C + C - 1)^{th}$ data in $S \times C$ pieces of data after the division.

**17.** The method according to any one of claims 14 to 16, wherein the alltoall corresponds to W groups, the first node is an $s_1^{th}$ node of a $w_1^{th}$ group in the W groups, and the second node is an $s_2^{th}$ node of a $w_2^{th}$ group in the W groups, wherein

wi is set to every integer in [0, W-1], and $w_2 = w_1 + offset$, wherein $offset = ((s_2\%W) - (si\%W))\%W$.

**18.** The method according to claim 14, wherein the determining, by the first processor, the first target data based on a collective communication manner and intermediate data of the first processor comprises:

dividing, by the first processor, intermediate data of the first processor based on the allreduce and a total quantity C of processors in the first node, to obtain C pieces of data;

obtaining, by the first processor, $i^{th}$ data of other (C-1) processors in the first node through the intra-node channel of the first node; and

obtaining the first target data after the first processor performs summation on $i^{th}$ data in the C pieces of data and the $i^{th}$ data of the other (C-1) processors in the first node, wherein

the first processor is an $i^{th}$ processor in the first node, and the second processor is an $i^{th}$ processor in the second node.

**19.** The method according to claim 14, wherein the allreduce corresponds to W groups, one group comprises S nodes, one node comprises C processors, the first processor is an $i^{th}$ processor in a group to which the first processor belongs, and the second processor is an $i^{th}$ processor in a group to which the second processor belongs; and

the determining, by the first processor, the first target data based on a collective communication manner and intermediate data of the first processor comprises:

dividing, by the first processor, the intermediate data of the first processor based on the allreduce and a total quantity $S \times C$ of processors in the group, to obtain $S \times C$ pieces of data;

obtaining, by the first processor through the intra-node channel of the first node and/or optical transmission channels that are between the first node and other (S-1) nodes in the group to which the first processor belongs and that are constructed by the MEMS, $i^{th}$ data of other $(S \times C - 1)$ processors in the group to which the first processor belongs; and

obtaining the first target data after the first processor performs summation on $i^{th}$ data in the $S \times C$ pieces of data and the $i^{th}$ data of the other (S×C-1) processors in the group to which the first processor belongs.

20. The method according to any one of claims 10 to 19, further comprising:

obtaining, by the first processor, second target data, wherein the second target data is data that is obtained by the second processor by performing model training in the second processor and that is to be transmitted to the first processor; and

adjusting, by the first processor, a parameter for model training in the first processor based on the second target data.

21. The method according to any one of claims 10 to 20, wherein before the performing, by a first processor, model training in the first processor, to obtain first target data, the method further comprises:

dividing, by the first processor, a plurality of nodes into W groups based on a total quantity of the plurality of nodes for joint model training, a total quantity of ports of the WSS, and a total quantity of available wavelengths in the WSS, wherein

when the total quantity of available wavelengths in the WSS is less than the total quantity of the ports of the WSS, and one group in the W groups corresponds to two preset wavelengths, W is equal to 1/2 of the total quantity of available wavelengths in the WSS.

22. A chip, comprising at least one processor and an interface, wherein

the interface is configured to provide program instructions or data for the at least one processor; and

the at least one processor is configured to execute the program instructions, to implement the method according to any one of claims 10 to 21.

23. A computing device, comprising a processor, wherein the processor is connected to a memory, the memory is configured to store a computer program, and the processor is configured to execute the computer program stored in the memory, to implement the method according to any one of claims 10 to 21.

24. A computer program product, wherein the computer program product comprises a computer program or instructions, and when the computer program or the instructions are executed, the method according to any one of claims 10 to 21 is implemented.

25. A computer-readable storage medium, wherein the computer-readable storage medium stores a computer program or instructions, and when the computer program or the instructions are executed, the method according to any one of claims 10 to 21 is implemented.

FIG. 1

FIG. 2

FIG. 3

FIG. 4

FIG. 5

FIG. 6

First intra-node data
aggregation

Node 0

| NPU0 | NPU1 | NPU2 | NPU3 |
|---|---|---|---|
| $a_{00}$ | $b_{00}$ | $c_{00}$ | $d_{00}$ |
| $a_{01}$ | $b_{01}$ | $c_{01}$ | $d_{01}$ |
| $a_{02}$ | $b_{02}$ | $c_{02}$ | $d_{02}$ |
| $a_{03}$ | $b_{03}$ | $c_{03}$ | $d_{03}$ |

Inter-node data
aggregation

$a_{00}+b_{00}+c_{00}+d_{00}$

$a_{10}+b_{10}+c_{10}+d_{10}$

$a_{20}+b_{20}+c_{20}+d_{20}$

$a_{30}+b_{30}+c_{30}+d_{30}$

Node 0

Node 1

Node 2

Node 3

Second intra-node
data aggregation

Node 0

| NPU0 | NPU1 | NPU2 | NPU3 |
|---|---|---|---|
| A | | | |
| | B | | |
| | | C | |
| | | | D |

FIG. 7

|  | NPU0 | NPU1 | NPU2 | NPU3 |
|---|---|---|---|---|
| (a) | $a_{00}$ | $b_{00}$ | $c_{00}$ | $d_{00}$ |
|  | $a_{01}$ | $b_{01}$ | $c_{01}$ | $d_{01}$ |
|  | $a_{02}$ | $b_{02}$ | $c_{02}$ | $d_{02}$ |
|  | $a_{03}$ | $b_{03}$ | $c_{03}$ | $d_{03}$ |

|  | NPU0 | NPU1 | NPU2 | NPU3 |
|---|---|---|---|---|
| (b) | $a_{00}$ | $a_{01}$ | $a_{02}$ | $a_{03}$ |
|  | $b_{00}$ | $b_{01}$ | $b_{02}$ | $b_{03}$ |
|  | $c_{00}$ | $c_{01}$ | $c_{02}$ | $c_{03}$ |
|  | $d_{00}$ | $d_{01}$ | $d_{02}$ | $d_{03}$ |

FIG. 8

FIG. 9

Output port

Input port

First wavelength

Second wavelength

Third wavelength

Modulator

Light source
pool

FIG. 10

(a)

(b)

FIG. 11

FIG. 12

FIG. 13

FIG. 14

FIG. 15

FIG. 16

FIG. 17

FIG. 18

FIG. 19

Step 1: Exchange an upper left corner of 2×2          Step 2: Exchange a lower left corner of 2×2

0          1          2          3                    0          1          2          3

Step 3: Exchange an upper right corner of 2×2         Step 4: Exchange a lower right corner of 2×2

0          1          2          3                    0          1          2          3

TO FIG. 20B

FIG. 20A

EP 4 414 904 A1

Step 5: Transpose in a node:

Transpose in a node

FIG. 20B

EP 4 414 904 A1

**Step 1: Perform data transmission based on an existing optical transmission channel between nodes**

Port 0    A0 ⟵ B0     C0 ⟵ D0

Port 1    A1    B1 ⟵ C1    D1

Port 2    A2    B2    C2    D2

Port 3    A3 ⟵ B3    C3 ⟶ D3

     **Node 0**    **Node 1**    **Node 2**    **Node 3**

**Step 2: Perform data transmission with reference to internal transmission of a node and the existing optical transmission channel**

Port 0    A0+B0    C0+D0

Port 1    A1+D1    B1+C1

Port 2    A2+C2    B2+D2

Port 3    A3+B3    C3+D3

     **Node 0**    **Node 1**    **Node 2**    **Node 3**

FIG. 21

**First data matrix**

FIG. 22

MEMS

MEMS

MEMS

WSS
2×2

MEMS

MEMS

MEMS

0

Port
1
2
3

Group 1

Node
1
Node
3
Node
5
Node
7

0
Port
1
2
3

Group 0

Node
0
Node
2
Node
4
Node
6

FIG. 23

MEMS0　　　　MEMS1

MESM port 0　　　MESM port 1

WSS port $u_0$　　　WSS port $u_1$

WSS1

WSS port $d_0$　　　WSS port $d_1$

Node port (6,0)　　　Node port (7,0)

Node 6　　　Node 7

FIG. 24

(a)

| NPU00 | NPU01 | NPU10 | NPU11 | ... | NPU70 | NPU71 |
|---|---|---|---|---|---|---|
| 000 | 010 | 100 | 110 | ... | 700 | 710 |
| 001 | 011 | 101 | 111 | ... | 701 | 711 |
| 002 | 012 | 102 | 112 | ... | 702 | 712 |
| 003 | 013 | 103 | 113 | ... | 703 | 713 |
| ... | ... | ... | ... | ... | ... | ... |
| 00E | 01E | 10E | 11E | ... | 70E | 71E |
| 00F | 01F | 10F | 11F | ... | 70F | 71F |

(b)

| NPU00 | NPU01 | NPU10 | NPU11 | ... | NPU70 | NPU71 |
|---|---|---|---|---|---|---|
| 000 | 001 | 002 | 003 | ... | 00E | 00F |
| 010 | 011 | 012 | 013 | ... | 01E | 01F |
| 100 | 101 | 102 | 103 | ... | 10E | 10F |
| 110 | 111 | 112 | 113 | ... | 11E | 11F |
| ... | ... | ... | ... | ... | ... | ... |
| 700 | 701 | 702 | 703 | ... | 70E | 70F |
| 710 | 711 | 712 | 713 | ... | 71E | 71F |

FIG. 25

EP 4 414 904 A1

Group 0

| NPU00 | NPU01 | NPU20 | NPU21 | NPU40 | NPU41 | NPU60 | NPU61 |
|---|---|---|---|---|---|---|---|
| 000 | 010 | 200 | 210 | 400 | 410 | 600 | 610 |
| 001 | 011 | 201 | 211 | 401 | 411 | 601 | 611 |
| 002 | 012 | 202 | 212 | 402 | 412 | 602 | 612 |
| 003 | 013 | 203 | **213** | 403 | 413 | 603 | 613 |
| 004 | 014 | 204 | 214 | **404** | 414 | 604 | 614 |
| 005 | 015 | 205 | 215 | 405 | **415** | 605 | 615 |
| 006 | 016 | 206 | 216 | 406 | 416 | **606** | 616 |
| 007 | 017 | 207 | 217 | 407 | 417 | 607 | **617** |

(a)
First
intra-group
data
aggregation

TO FIG. 26B

FIG. 26A

000+010+...+600+610

100+110+...+700+710

001+011+...+601+611

(b)
Inter-group
data
aggregation

101+111+...+701+711

Pattern 1

Pattern 2

Group 0

Group 1

FIG. 26B

Group 0

| NPU00 | NPU01 | NPU20 | NPU21 | NPU40 | NPU41 | NPU60 | NPU61 |

A

B

C

D

E

F

G

H

(c)
Second
intra-group
data
aggregation

FIG. 26C

EP 4 414 904 A1

Group 0

| Node 0 | Node 2 | Node 4 | Node 6 |
|--------|--------|--------|--------|
| **00** | 20 | 40 | 60 |
| 01 | **21** | 41 | 61 |
| 02 | 22 | **42** | 62 |
| 03 | 23 | 43 | **63** |

FIG. 27

First NPU

Second NPU

2801: Perform first model training to obtain first target data

2802: Send the first target data through an optical transmission channel constructed by an MEMS

2803: Obtain aggregated data based on the first target data, and adjust a parameter for training a second model based on the aggregated data

FIG. 28

(a)

(b)

FIG. 29

FIG. 30

Processor 100

Processor core 101

Processor core 102

Processor core 103

⋮

Processor core 10J

External buffer

Internal memory

| General-purpose unit | Accelerator unit | Input/Output control unit | Interface unit |

FIG. 31

<table>
<tr><td colspan="2">INTERNATIONAL SEARCH REPORT</td><td>International application No.<br>**PCT/CN2022/096842**</td></tr>
</table>

**A. CLASSIFICATION OF SUBJECT MATTER**

G06N 20/20(2019.01)i

According to International Patent Classification (IPC) or to both national classification and IPC

**B. FIELDS SEARCHED**

Minimum documentation searched (classification system followed by classification symbols)

G06N, H04L

Documentation searched other than minimum documentation to the extent that such documents are included in the fields searched

Electronic data base consulted during the international search (name of data base and, where practicable, search terms used)

CNPAT, CNKI, EPODOC, WPI: 模型, 训练, 微机电, 传, 输, 通道, 信道, 通信, 发送, 接收, 光, 波长, 开关, model, training, mems, communicat+, transmit+, channel?, send+, receiv+, light, optical, wavelength, switch+, wss

**C. DOCUMENTS CONSIDERED TO BE RELEVANT**

| Category* | Citation of document, with indication, where appropriate, of the relevant passages | Relevant to claim No. |
|---|---|---|
| Y | CN 111612167 A (JD DIGITS HOLDING CO., LTD.) 01 September 2020 (2020-09-01)<br>claims 1, 21 and 22, and description, paragraphs [0146]-[0161] | 1-25 |
| Y | WO 2020199143 A1 (HUAWEI TECHNOLOGIES CO., LTD.) 08 October 2020<br>(2020-10-08)<br>claim 1 | 1-25 |
| A | CN 112270711 A (BEIJING BAIDU NETCOM SCIENCE AND TECHNOLOGY CO., LTD.)<br>26 January 2021 (2021-01-26)<br>entire document | 1-25 |
| A | CN 110908799 A (INSPUR ELECTRONIC INFORMATION INDUSTRY CO., LTD.) 24<br>March 2020 (2020-03-24)<br>entire document | 1-25 |
| A | CN 112055878 A (KONINKL PHILIPS NV) 08 December 2020 (2020-12-08)<br>entire document | 1-25 |
| A | CN 113033828 A (JIANGSU CHAOLIU INFORMATION TECHNOLOGY CO., LTD.) 25<br>June 2021 (2021-06-25)<br>entire document | 1-25 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 August 2022** | **31 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/096842** |

**C.  DOCUMENTS CONSIDERED TO BE RELEVANT**

| Category* | Citation of document, with indication, where appropriate, of the relevant passages | Relevant to claim No. |
| --- | --- | --- |
| A | US 2017255501 A1 (MELLANOX TECHNOLOGIES, LTD.) 07 September 2017 (2017-09-07) entire document | 1-25 |

Form PCT/ISA/210 (second sheet) (January 2015)

**INTERNATIONAL SEARCH REPORT**
Information on patent family members

International application No.

**PCT/CN2022/096842**

| Patent document cited in search report | | | Publication date (day/month/year) | Patent family member(s) | | | Publication date (day/month/year) |
|---|---|---|---|---|---|---|---|
| CN | 111612167 | A | 01 September 2020 | WO | 2020173228 | A1 | 03 September 2020 |
| WO | 2020199143 | A1 | 08 October 2020 | CN | 112042168 | A | 04 December 2020 |
| | | | | US | 2022012590 | A1 | 13 January 2022 |
| | | | | WO | 2020199560 | A1 | 08 October 2020 |
| | | | | EP | 3934205 | A1 | 05 January 2022 |
| | | | | CN | 112042168 | B | 04 March 2022 |
| CN | 112270711 | A | 26 January 2021 | | None | | |
| CN | 110908799 | A | 24 March 2020 | | None | | |
| CN | 112055878 | A | 08 December 2020 | WO | 2019211089 | A1 | 07 November 2019 |
| | | | | US | 2021042667 | A1 | 11 February 2021 |
| | | | | EP | 3788627 | A1 | 10 March 2021 |
| CN | 113033828 | A | 25 June 2021 | CN | 113033828 | B | 22 March 2022 |
| US | 2017255501 | A1 | 07 September 2017 | US | 10521283 | B2 | 31 December 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111265110
- CN 202111617115